# EUROPEAN PATENT SPECIFICATION

(11) **EP 4 581 520 B1**
(45) Date of publication and mention of the grant of the patent: **02.12.2026**
(21) Application number: 23762097.6
(22) Date of filing: 27.07.2023
(51) Int. Cl.: G06N 3/045, G06N 3/0455, G06N 3/0495, H04N 19/10, H04N 19/65

(54) **DATA RECONSTRUCTION USING MACHINE-LEARNING PREDICTIVE CODING**
DATENREKONSTRUKTION MITTELS PRÄDIKTIVER CODIERUNG VON MASCHINELLEM LERNEN
RECONSTRUCTION DE DONNÉES FAISANT APPEL À UN CODAGE PRÉDICTIF D'APPRENTISSAGE AUTOMATIQUE

(30) Priority: 02.09.2022 GR 20220100725
(43) Date of publication of application: 09.07.2025
(73) Proprietor: QUALCOMM INCORPORATED, San Diego, California 92121-1714 (US)
(72) Inventor: SAUTIERE, Guillaume Konrad, San Diego, California 92121 (US); RAJENDRAN, Vivek, San Diego, California 92121 (US); SKORDILIS, Zisis Iason, San Diego, California 92121 (US)
(74) Representative: Reddie & Grose LLP
(86) International application number: PCT/US2023/071139
(87) International publication number: WO 2024/050192

(56) References cited:
- US-A1- 2020 382 803
- REZA POURREZA ET AL: "Extending Neural P-frame Codecs for B-frame Coding", ARXIV.ORG, CORNELL UNIVERSITY LIBRARY, 201 OLIN LIBRARY CORNELL UNIVERSITY ITHACA, NY 14853, 30 March 2021 (2021-03-30), XP091023768
- JOHANNES BALLÉ ET AL: "End-to-end Optimized Image Compression", 3 March 2017 (2017-03-03), pages 1 - 27, XP055641611, Retrieved from the Internet <URL:https://arxiv.org/pdf/1611.01704.pdf> [retrieved on 20191112]
- YANG YANG ET AL: "Feedback Recurrent Autoencoder", ICASSP 2020 - 2020 IEEE INTERNATIONAL CONFERENCE ON ACOUSTICS, SPEECH AND SIGNAL PROCESSING (ICASSP), IEEE, 4 May 2020 (2020-05-04), pages 3347 - 3351, XP033793713, DOI: 10.1109/ICASSP40776.2020.9054074
- AGUSTSSON EIRIKUR ET AL: "Scale-Space Flow for End-to-End Optimized Video Compression", 2020 IEEE/CVF CONFERENCE ON COMPUTER VISION AND PATTERN RECOGNITION (CVPR), IEEE, 13 June 2020 (2020-06-13), pages 8500 - 8509, XP033805553, DOI: 10.1109/CVPR42600.2020.00853
- JIANG HUAIZU ET AL: "Super SloMo: High Quality Estimation of Multiple Intermediate Frames for Video Interpolation", 2018 IEEE/CVF CONFERENCE ON COMPUTER VISION AND PATTERN RECOGNITION, IEEE, 18 June 2018 (2018-06-18), pages 9000 - 9008, XP033473825, DOI: 10.1109/CVPR.2018.00938

## Description

### 11. Field

The present disclosure is generally related to encoding and/or decoding data, in particular, using machine-learning predictive coding to generate a network-predicted data sample.

### II. Description of Related Art

Advances in technology have resulted in smaller and more powerful computing devices. For example, there currently exist a variety of portable personal computing devices, including wireless telephones such as mobile and smart phones, tablets and laptop computers that are small, lightweight, and easily carried by users. These devices can communicate voice packets, data packets, or both, over wired or wireless networks. Further, many such devices incorporate additional functionality such as a digital still camera, a digital video camera, a digital recorder, and an audio file player. Also, such devices can process executable instructions, including software applications, such as a web browser application, that can be used to access the Internet. As such, these devices can include significant computing capabilities.

One common use of such wireless devices is communications (e.g., voice, video, and/or data communications). In wireless communications, a device that has data to send generates a signal that represents the data as a set of bits. Often, the signal also includes other information, such as packet headers. Because wireless devices are often power constrained (e.g., battery powered) and because wireless communications resources (e.g., radiofrequency channels) can be crowded, it may be desirable to send particular data using as few bits as possible. However, many techniques for representing data using fewer bits are lossy. That is, encoding the data to be transmitted using fewer bits leads to a less accurate representation of the data. Thus, there may be conflict between a goal of sending an accurate (e.g., a high fidelity) representation of the data to be transmitted (e.g., using more bits) and sending data efficiently (e.g., using fewer bits).

The paper "Extending Neural P-frame Codecs for B-frame Coding" by Reza Pourreza et al, Qualcomm AI Research; XP091023768, relates to neural video codecs with B-frame coding capability. Two reference frames are interpolated to generate a single reference frame, which is used together with an existing P-frame codec to encode an input B-frame.

US 2020/382803 A1 relates to a video transcoding system and method. The system includes: a main transcoder circuitry configured to acquire an input video, transcode the input video to generate a transcoded video, and transmit the transcoded video to a receiving device; and a backup transcoder circuitry configured to acquire the input video, buffer the input video, acquire transcoding location information of the main transcoder circuitry at the time when the main transcoder circuitry is down, transcode the buffered input video according to the transcoding location information to generate an output video, and transmit the output video to the receiving device.

The paper "End-to-end Optimized Image Compression" by Johannes Ballé et al; XP055641611, describes an image compression method consisting of a nonlinear analysis transformation, a uniform quantizer, and a nonlinear synthesis transformation. The transfers are constructed in three successive stages of convolutional linear filters and nonlinear activation filters. Using a variant of stochastic gradient descent, the entire model is jointly optimized for rate-distortion performance over a database of training images, introducing a continuation proxy for the discontinuous loss function arising from the quantizer. Across an independent set of test images, the optimized method generally exhibits better rate-distortion performance than the standard JPEG and JPEG2000 compression methods.

The paper "Feedback Recurrent Autoencoder" by Yang Yang et al; XP033793713, proposes a recurrent autoencoder architecture, termed Feedback Recurrent AutoEncoder (FRAE), for online compression of sequential data with temporal dependency. The recurrent structure of FRAE is designed to efficiently extract the redundancy along the time dimension and allows a compact discrete representation of the data to be learned.

### III. Summary

The scope of protection is defined by the scope of the appended claims. Any examples which do not fall within the scope of the claims are not presented as embodiments but as examples which are helpful for understanding the invention.

### IV. Brief Description of the Drawings

FIG. 1 is a diagram of a particular illustrative example of a system that is configured to use machine-learning predictive coding to reconstruct a data sample using nearby reconstructed data samples.
FIG. 2 is a diagram of a particular illustrative example of a system that is configured to determine a residual vector of a reconstructed data sample generated using machine-learning predictive coding.
FIG. 3 is a diagram of a particular illustrative example of a system that is configured to bundle data representing data samples into a single packet.
FIG. 4 is a diagram of a particular illustrative example of a system that includes two or more devices configured to communicate via transmission of encoded data.
FIG. 5 is a diagram of a particular illustrative example of a neural network architecture that is configured to use machine-learning predictive coding to reconstruct a data sample using nearby reconstructed data.
FIG. 6 is a diagram of a particular illustrative example of a system that is configured to use machine-learning predictive coding to reconstruct multiple data samples at varying positions.
FIG. 7 is a diagram of a feedback recurrent autoencoder (FRAE) architecture that is configured to generate a subsidiary vector based on multiple data samples.
FIG. 8 is a diagram of another particular illustrative example of a system that is configured to use machine-learning predictive coding to reconstruct multiple data samples at varying positions.
FIG. 9 is a diagram of a particular example of components of an encoding and decoding device in an integrated circuit.
FIG. 10 is a diagram of a mobile device that includes circuitry configured to use machine-learning predictive coding to reconstruct a data sample using nearby reconstructed data samples, in accordance with some examples of the present disclosure.
FIG. 11 is a diagram of a headset that includes circuitry configured to use machine-learning predictive coding to reconstruct a data sample using nearby reconstructed data samples, in accordance with some examples of the present disclosure.
FIG. 12 is a diagram of a wearable electronic device that includes circuitry configured to use machine-learning predictive coding to reconstruct a data sample using nearby reconstructed data samples, in accordance with some examples of the present disclosure.
FIG. 13 is a diagram of a voice-controlled speaker system that includes circuitry configured to use machine-learning predictive coding to reconstruct a data sample using nearby reconstructed data samples, in accordance with some examples of the present disclosure.
FIG. 14 is a diagram of a camera that includes circuitry configured to use machine-learning predictive coding to reconstruct a data sample using nearby reconstructed data samples, in accordance with some examples of the present disclosure.
FIG. 15 is a diagram of a headset, such as a virtual reality, mixed reality, or augmented reality headset, that includes circuitry configured to use machine-learning predictive coding to reconstruct a data sample using nearby reconstructed data samples, in accordance with some examples of the present disclosure.
FIG. 16 is a diagram of a first example of a vehicle that includes circuitry configured to use machine-learning predictive coding to reconstruct a data sample using nearby reconstructed data samples, in accordance with some examples of the present disclosure.
FIG. 17 is a diagram of a second example of a vehicle that includes circuitry configured to use machine-learning predictive coding to reconstruct a data sample using nearby reconstructed data samples, in accordance with some examples of the present disclosure.
FIG. 18 is a flowchart of a particular example of a method of operation of a communications device.
FIG. 19 is a flowchart of another particular example of a method of operation of a communications device.
FIG. 20 is a diagram of a particular example of components of a transmitting device in an integrated circuit.
FIG. 21 is a diagram of a particular example of components of a receiving device in an integrated circuit.
FIG. 22 is a block diagram of a particular illustrative example of a device that is operable to perform encoding, decoding, or both.

### V. Detailed Description

A feedback redundant autoencoder (FRAE), or a different type of encoder, can be used to encode data samples of a data stream (e.g., an audio data stream, a video data stream, etc.) to generate information that is transmitted to a receiving device. For example, each data sample can be processed by the FRAE to generate a latent vector. For many applications, the latent vector is quantized to form a latent code that is included in a packet that is transmitted to the receiving device. Such data encoding and transmission schemes are relatively efficient ways to communicate data; however, additional efficiency could be attained by using machine-learning predictive coding algorithms at the receiving device to (autonomously) generate network-predicted data samples for particular data samples of the data stream even if no data bits representing the particular data samples (e.g., no residual vectors) are communicated to the receiving device.

Aspects disclosed herein conserve transmission bandwidth by not transmitting data representing particular data samples. For example, no data bits (e.g., zero data bits) may be allocated for transmission of data representing some of the data samples of a data stream. In spite of allocating zero data bits to the particular data samples, a receiving device is still enabled to generate network-predicted data samples that are perceivably accurate representations of the particular data samples.

For example, a first device (e.g., a transmitting device) can encode reference data samples to generate latent vectors. Different from the reference data samples being encoded, the first device bypasses encoding of intermediate data samples, *e.g.,* of data samples in-between the reference data samples.

Rather than encoding of intermediate data samples, the first device provides the reference data samples to a neural network. The neural network uses machine-learning predictive coding to generate predicted data samples for the intermediate data samples. At least one predicted data sample corresponds to a relative timing in-between a first reference data sample and a second reference data sample. In some cases, the predicted data samples may be a perceptually accurate representation of the intermediate data samples such that the allocation of data bits for data representing a predicted data sample becomes dispensable.

As used herein, a "reference data sample" refers to a data sample of a data stream that is used to predict or reconstruct a predicted data sample. In a particular aspect, the designation of a particular data sample as a reference data sample or as a predicted data sample is independent of content of the data sample. Rather, the designation may be based on a perceptual quality of the machine-learning prediction and/or on a general or temporary need to reduce the transmission bandwidth when communicating with a receiving device. There may be no substantive differences between the contents of a reference data sample and a predicted data sample. Latent codes corresponding to latent vectors encoding the corresponding reference data samples are transmitted to a second device (e.g., a receiving device).

The second device can reconstruct the reference data samples by performing decoding operations on the latent codes received from the first device. After decoding the reference data samples, the second device provides the reconstructed reference data samples to a neural network. The neural network uses machine-learning predictive coding to generate predicted data samples. At least one predicted data sample corresponds to a temporal position in-between a first reference data sample and a second reference data sample. In some cases, the predicted data samples may be an accurate representation of the intermediate data samples to substantially improve the quality of the reconstructed reference data samples.

As used herein, the predicted data sample can be referred to as a "network-predicted data sample." Thus, instead of using interpolation techniques to generate an interpolated data sample based on the reconstructed reference data samples, the second device implements a non-linear and data-driven neural network model to reconstruct features of the predicted data sample. As a result, the network-predicted data sample is a more accurate representation of the predicted data sample than a data sample generated based solely on interpolation.

Unless expressly limited by its context, the term "generating" is used herein to indicate any of its ordinary meanings, such as computing or otherwise producing. Unless expressly limited by its context, the term "calculating" is used herein to indicate any of its ordinary meanings, such as computing, evaluating, smoothing, and/or selecting from a plurality of values. Unless expressly limited by its context, the term "obtaining" is used to indicate any of its ordinary meanings, such as calculating, deriving, receiving (e.g., from another component, block, or device), and/or retrieving (e.g., from a memory register or an array of storage elements).

Unless expressly limited by its context, the term "producing" is used to indicate any of its ordinary meanings, such as calculating, generating, and/or providing. Unless expressly limited by its context, the term "providing" is used to indicate any of its ordinary meanings, such as calculating, generating, and/or producing. Unless expressly limited by its context, the term "coupled" is used to indicate a direct or indirect electrical or physical connection. If the connection is indirect, there may be other blocks or components between the structures being "coupled." For example, a loudspeaker may be acoustically coupled to a nearby wall via an intervening medium (e.g., air) that enables propagation of waves (e.g., sound) from the loudspeaker to the wall (or vice-versa).

The term "configuration" may be used in reference to a method, apparatus, device, system, or any combination thereof, as indicated by its particular context. Where the term "comprising" is used in the present description and claims, it does not exclude other elements or operations. The term "based on" (as in "A is based on B") is used to indicate any of its ordinary meanings, including the cases (i) "based on at least" (e.g., "A is based on at least B") and, if appropriate in the particular context, (ii) "equal to" (e.g., "A is equal to B"). In the case (i) where A is based on B includes based on at least, this may include the configuration where A is coupled to B. Similarly, the term "in response to" is used to indicate any of its ordinary meanings, including "in response to at least." The term "at least one" is used to indicate any of its ordinary meanings, including "one or more". The term "at least two" is used to indicate any of its ordinary meanings, including "two or more".

The terms "apparatus" and "device" are used generically and interchangeably unless otherwise indicated by the particular context. Unless indicated otherwise, any disclosure of an operation of an apparatus having a particular feature is also expressly intended to disclose a method having an analogous feature (and vice versa), and any disclosure of an operation of an apparatus according to a particular configuration is also expressly intended to disclose a method according to an analogous configuration (and vice versa). The terms "method," "process," "procedure," and "technique" are used generically and interchangeably unless otherwise indicated by the particular context. The terms "element" and "module" may be used to indicate a portion of a greater configuration. The term "packet" may correspond to a unit of data that includes a header portion and a payload portion.

As used herein, the term "communication device" refers to an electronic device that may be used for voice and/or data communication over a wireless communication network. Examples of communication devices include speaker bars, smart speakers, cellular phones, personal digital assistants (PDAs), handheld devices, headsets, wireless modems, laptop computers, personal computers, etc.

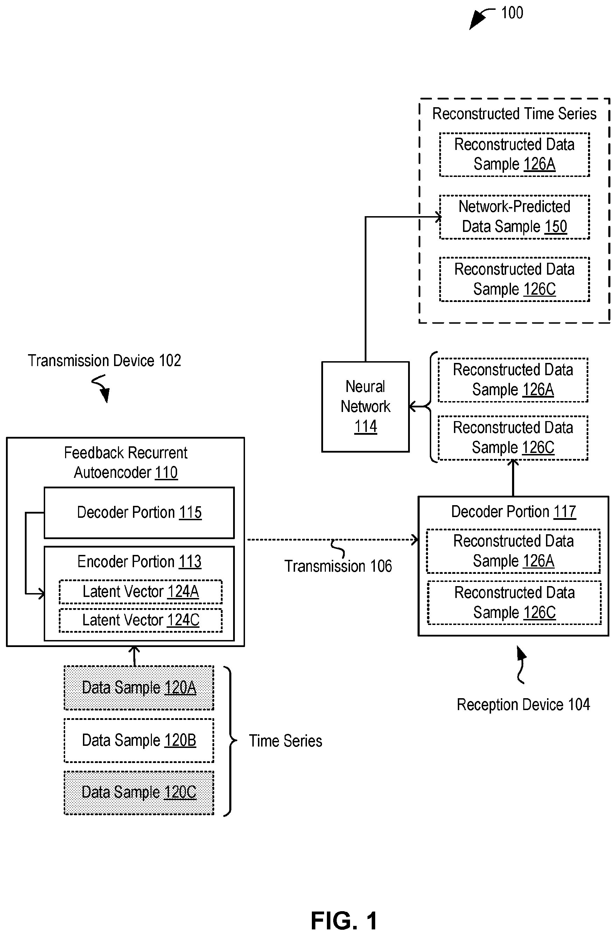

Particular aspects are described herein with reference to the drawings. In the description, common features are designated by common reference numbers throughout the drawings. In some drawings, multiple instances of a particular type of feature are used. Although these features are physically and/or logically distinct, the same reference number is used for each, and the different instances are distinguished by addition of a letter to the reference number. When the features as a group or a type are referred to herein (e.g., when no particular one of the features is being referenced), the reference number is used without a distinguishing letter. However, when one particular feature of multiple features of the same type is referred to herein, the reference number is used with the distinguishing letter. For example, referring to FIG. 1, multiple reconstructed data samples are illustrated and associated with reference numbers 126A and 126B. When referring to a particular one of these reconstructed data samples, such as the reconstructed data sample 126A, the distinguishing letter "A" is used. However, when referring to any arbitrary one of these reconstructed data samples or to these reconstructed data samples as a group, the reference number 126 is used without a distinguishing letter.

FIG. 1 is a diagram of a particular illustrative example of a system 100 that is configured to use machine-learning predictive coding to reconstruct a data sample using nearby reconstructed data samples. The system 100 includes a transmission device 102 and reception device 104. The transmission device 102 is configured to send one or more encoded data packets to the reception device 104.

The transmission device 102 includes a feedback recurrent autoencoder (FRAE) 110. Although a FRAE architecture is illustrated, the techniques described herein may be operable using any architecture or circuitry that is operable to encode data, to reconstruct data based on an encoded version of the data, or both. The FRAE 110 is configured to receive a data stream that includes data arranged in a time series. For example, the data stream can include a time series of data samples 120, where each data sample 120 represents a time-windowed portion of data. As illustrated in FIG. 1, the data samples 120 include a data sample 120A, a data sample 120B, and a data sample 120C. Although three data samples 120A-120C are illustrated in FIG. 1, in other implementations, additional data samples 120 can be included in the time series of data samples 120. As a non-limiting example, one or more data samples 120 can be disposed in-between the data sample 120A and the data sample 120B, one or more data samples 120 can be disposed in-between the data sample 120B and the data sample 120C, etc. The data sample 120A includes data (e.g., extracted features) generated at an earlier time instance than data included in the data sample 120B, and the data sample 120B includes data generated at an earlier time instance than data included in the data sample 120C. According to some implementations, adjacent data samples 120 can include overlapping data (e.g., temporal redundancies). For example, a portion of the data in the data sample 120A can also be included in the data sample 120B. In some examples, the data included in the data samples 120 includes media data, such as voice data, audio data, video data, game data, augmented reality data, other media data, or combinations thereof.

In the example of FIG. 1, the FRAE 110 includes an encoder portion 113 and a decoder portion 115. The encoder portion 113 is configured to encode the data samples 120A, 120C to generate corresponding latent vectors 124A, 124C. Each latent vector 124 represents output state data (also referred to as "output states") of a latent space of the FRAE 110, which encodes a corresponding data sample 120A, 120C. As used herein, the term "vector" is not intended to limit the output state data to a particular data structure. For example, a latent vector may include any ordered arrangement of data values, such as, but not limited to one or more vectors, one or more arrays, a collection of indexed values, etc. For ease of illustration and description, the data samples 120A, 120C that are encoded by the encoder portion 113 of the FRAE 110 are shaded gray and are referred to as "reference data samples." Data including or representing the latent vectors 124A, 124C are transmitted to the reception device 104 as part of a transmission 106. For example, latent code representing the latent vectors 124A, 124C may be sent in one or more packets via the transmission 106.

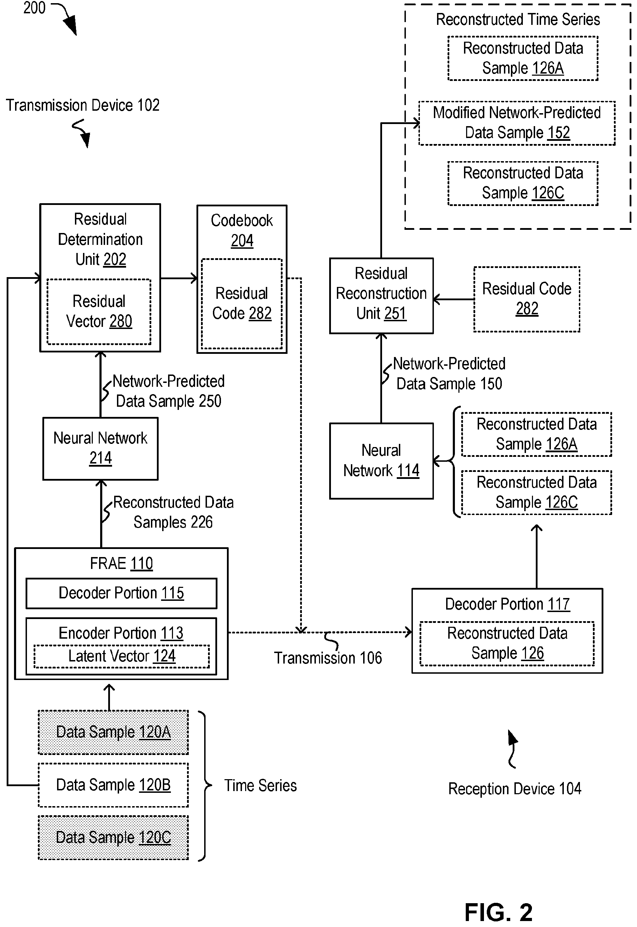

To reduce the amount of data bits that are transmitted to the receiving device, the encoder portion 113 of the FRAE 110 can bypass encoding operations on particular data samples, such as the data sample 120B, and transmit the latent vector(s) 124A, 124C associated with the reference data samples 120A, 120C. As described below, in these scenarios, the data samples that do not undergo encoding operations at the FRAE 110 can be reconstructed at the reception device 104 using machine-learning predictive coding (e.g., a neural network 114). As described with respect to FIG. 2, in some implementations, the data samples that do not undergo encoding operations at the FRAE 110 can also be reconstructed at the transmission device 102 using machine-learning predictive coding. For ease of illustration and description, the data sample 120B that does not undergo encoding operations is unshaded and is referred to as a "predicted data sample."

To encode the data sample 120A for transmission, the data sample 120A is provided to the encoder portion 113 of the FRAE 110 at a first time instance. The encoder portion 113 of the FRAE 110 is configured to generate the latent vector 124A for the data sample 120A. Data representing the latent vector 124A (e.g., a latent code corresponding to a quantized version of the latent vector 124A) is transmitted in a data packet to the reception device 104. The encoder portion 113 of the FRAE 110 can include a plurality of layers, such as one or more fully connected layers, one or more recurrent layers (e.g., one or more gated recurrent unit (GRU) layers), a bottleneck layer, or other layers. The one or more fully connected layers correspond to a feed-forward neural network architecture that includes multiple input nodes and generates one or more outputs based on different weighting and mapping functions. According to some implementations, a fully connected layer can include multiple node levels (e.g., input level nodes, intermediate level nodes, and output level nodes) that have unique weighting and mapping patterns. For ease of explanation, the fully connected layers are described as receiving one or more inputs (e.g., the data sample 120A) and generating one or more outputs based on neural network operations. However, it should be understood that the architecture of each fully connected layer described herein can be unique and can have unique weighting and mapping patterns as to generate simple or complex neural networks. A GRU layer is configured to generate input data (from the one or more outputs of the fully connected layer) that is provided to the bottleneck layer. The GRU layer can use data associated with prior time steps to generate the input data. The bottleneck layer can generate the latent vector 124A based on the input data of the GRU layer.

To encode the data sample 120C for transmission, the data sample 120C is provided to the encoder portion 113 of the FRAE 110 at a second time instance that is after the first time instance. In a particular implementation, encoding of the data sample 120C may be based in part on feedback (e.g., a recurrent state) from the decoder portion 115 of the FRAE 110, where the feedback is related to the decoding of a previous data sample (e.g., the data sample 120A). According to one implementation, the data sample 120B is not provided to the FRAE 110. According to another implementation, the data sample 120B is provided to the FRAE 110 and the FRAE 110 bypasses performance of encoding operations on the data sample 120B.

The reception device 104 includes a decoder portion 117. The decoder portion 117 of the reception device 104 is a duplicate (e.g., another instance) of the decoder portion 115 of the FRAE 110 of the transmission device 102. Upon reception of the latent vector 124A, the decoder portion 117 is configured to generate a reconstructed data sample 126A based on decoding the latent vector 124A. The reconstructed data sample 126A corresponds to a reconstructed version of the data sample 120A. To illustrate, the decoder portion 117 of the reception device 104 can include a GRU layer and one or more fully connected layers. The GRU layer is configured to use the feedback (e.g., recurrent state from a previous data sample) for initialization and to perform decoding operations on the latent vector 124A to generate an output that is provided to the one or more fully connected layers for processing. The one or more fully connected layers are configured to generate the reconstructed data sample 126A based on the output of the GRU layer to reconstruct the data sample 120A. The decoder portion 117 can operate in a substantially similar manner to generate the reconstructed data sample 126C based on the latent vector 124C. The reconstructed data sample 126C corresponds to a reconstructed version of the data sample 120C. Although the examples above describe the FRAE 110 as including one or more GRU layers and one or more fully connected layers, in other implementations, the FRAE 110 includes more layers, fewer layers, or different layers. For example, the FRAE 110 may include one or more convolution layers, one or more self-attention layers, one or more other types of recurrent or autoregressive layers, or combinations thereof.

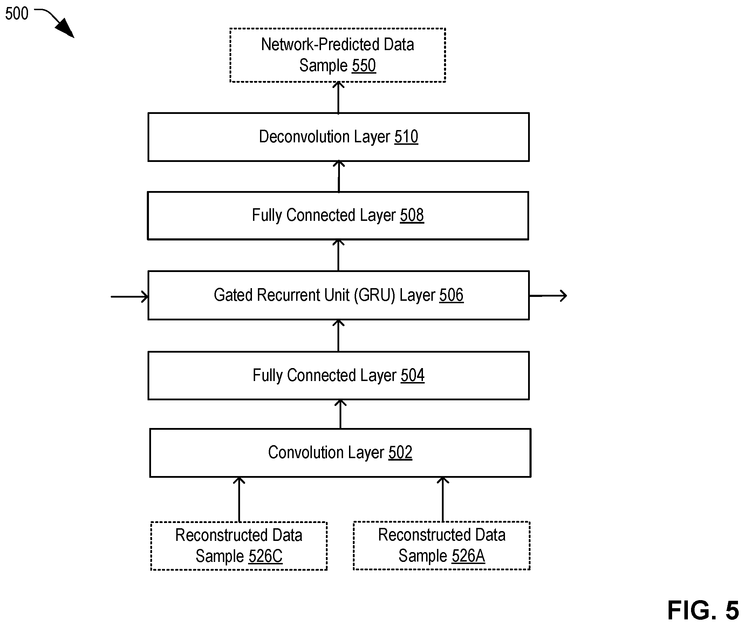

The reconstructed data sample 126A and the reconstructed data sample 126C are provided as inputs to the neural network 114 to generate a network-predicted data sample 150. The network-predicted data sample 150 corresponds to a predicted version of the data sample 120B, which is disposed in-between the data sample 120A and the data sample 120C in the time series. Thus, instead of using pure interpolation techniques to generate an interpolated data sample based on the reconstructed data samples 126A, 126C, the system 100 implements a non-linear and data-driven neural network model to predict features of the data sample 120B and generates the network-predicted data sample 150 based on the prediction. As a result, the network-predicted data sample 150 is a more accurate representation of the data sample 120B than a data sample generated based solely on interpolation. The operations and the architecture of the neural network 114 are described in greater detail with respect to FIG. 5.

The system of FIG. 1 enables an accurate representation of data to be transmitted using relatively few bits. For example, by using machine-learning predictive coding (e.g., the neural network 114) to reconstruct the data sample 120B based on reconstructions (e.g., the reconstructed data samples 126A, 126C) of nearby data samples 120A, 120C, a network-predicted data sample 150 of the data sample 120B can be generated independent of the data sample 120B. As a result, encoding and transmission of the data sample 120B can be bypassed at the transmission device 102 to reduce the amount of data bits that are transmitted, and the reception device 104 can reconstruct an accurate representation of the data sample 120B based on reconstructions of the nearby data samples 120A, 120C. Thus, the reception device 104 can generate a relatively accurate representation of the data sample 120B although transmission of an encoded representation of the data sample 120B is bypassed or if an encoded representation of the data sample 120B is not received. For example, the neural network 114 can be used to generate network-predicted data samples associated with missing (e.g., unintentionally lost) or omitted (e.g., intentionally omitted) data samples.

FIG. 2 is a diagram of a particular illustrative example of a system 200 that is configured to determine a residual vector of a reconstructed data sample generated using machine-learning predictive coding. The system 200 includes the transmission device 102 and the reception device 104.

In the example illustrated in FIG. 2, the transmission device 102 includes certain components described with reference to the system 100 of FIG. 1, each of which operates in a substantially similar manner as described above. For example, the transmission device 102 includes the encoder portion 113 of the FRAE 110 and the decoder portion 115 of the FRAE 110. In a similar manner as described above, the encoder portion 113 of the FRAE 110 is configured to generate the latent vector 124A, 124C for the data samples 120A, 120C, respectively.

In the example of FIG. 2, the decoder portion 115 of the FRAE 110 is configured to generate reconstructed data samples 226 based on the latent vector 124. For example, the decoder portion 115 of the FRAE 110 can operate in a substantially similar manner as the decoder portion 117 of the reception device 104 to generate the reconstructed data samples 226 based on the latent vector 124. Thus, the reconstructed data samples 226 are substantially similar to the reconstructed data samples 126A, 126C generated by the decoder portion 117 of the reception device 104.

Additionally, the transmission device 102 includes a neural network 214 and a residual determination unit 202. The neural network 214 of the transmission device 102 is a duplicate (e.g., another instance of) the neural network 114 of the reception device 104, and as such, is configured to use machine-learning predictive coding to generate a network-predicted data sample 250. The network-predicted data sample 250 is substantially similar to the network-predicted data sample 150.

There can be slight differences between the network-predicted data sample 250 and the data sample 120B. To account for the differences, the residual determination unit 202 is configured to determine a residual between the network-predicted data sample 250 and the data sample 120B. Data descriptive of the residual can be provided to the reception device 104 to enable the reception device 104 to adjust the network-predicted sample (if appropriate) to better match the data sample 120B. To illustrate, the data sample 120B and the network-predicted data sample 250 are provided to the residual determination unit 202. The residual determination unit 202 is configured to determine a residual vector 280 associated with the network-predicted data sample 250. The residual vector 280 can be based on a comparison of (e.g., a difference between) the data sample 120B and the network-predicted data sample 250.

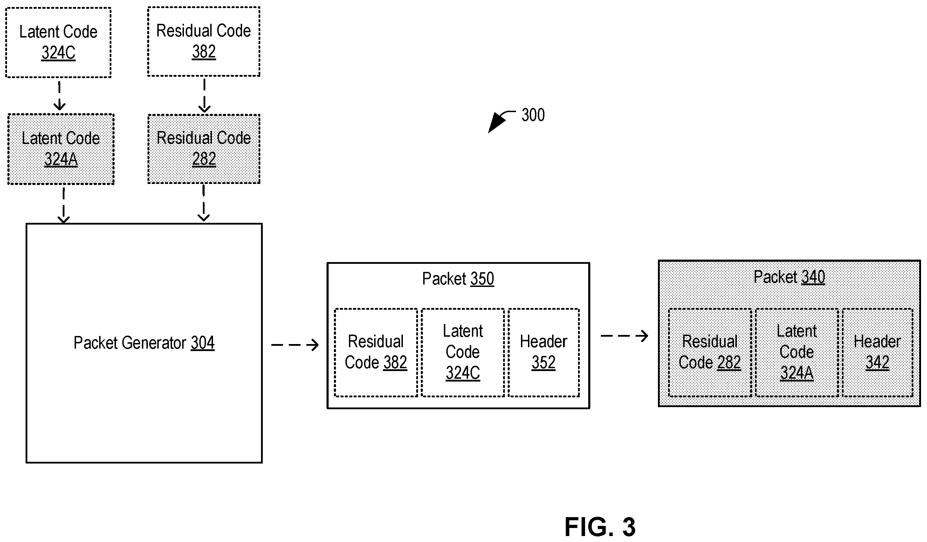

A codebook 204 can be used to quantize the residual vector 280 to generate a residual code 282. For example, a processor (or a quantizer) can map a value (e.g., a floating-point value) of the residual vector 280 to a representative value of the codebook 204 to generate the residual code 282. As further described with respect to FIGS. 3-5, the residual code 282 can be packetized and transmitted to the receiving device to improve reconstruction of the data sample 120B at the reception device 104.

In the example of FIG. 2, data representative of the residual vector 280 and data representative of the output latent vector 124A, 124C are included in the transmission 106 to the reception device 104. To illustrate, the residual code 282 (representing a quantized version of the residual vector 280) and latent code (representing quantized versions of the latent vectors 124) may be sent in one or more packets via the transmission 106.

In the example of FIG. 2, the reception device 104 includes a residual reconstruction unit 251. The residual reconstruction unit 251 is configured to receive the residual code 282 from the transmission device 102. The residual reconstruction unit 251 is also configured to modify the network-predicted data sample 150 based on the residual code 282 to generate a modified network-predicted data sample 152. Because the residual code 282 takes into account the residual between the data sample 120B and the network-predicted data sample 250, modifying the network-predicted data sample 150 based on the residual code 282 results in a more accurate representation of the data sample 120B (than the network-predicted data sample 150) at the reception device 104. Thus, by modifying the network-predicted data sample 150 based on the residual code 282, the reception device 104 can further improve reconstruction of the data sample 120B.

The system 200 enables a more accurate representation of data to be transmitted using relatively few bits. For example, by using machine-learning predictive coding (e.g., the neural network 114) to reconstruct the predicted data sample 152 based on reconstructions (e.g., the reconstructed data samples 126A, 126C) of reference data samples 120A, 120C and the residual code 282, an accurate representation of the data sample 120B can be generated. As a result, encoding and transmission of the data sample 120B can be bypassed at the transmission device 102 to reduce the amount of data bits that are transmitted, and the reception device 104 can reconstruct a more accurate representation of the data sample 120B (e.g., the modified network-predicted data samples 152) based on reconstructions (e.g., the reconstructed data samples 126A, 126C) of the nearby data samples 120A, 120C using the neural network 114. Thus, the reception device 104 can generate a relatively accurate representation of the data sample 120B even if transmission of an encoded representation of the data sample 120B is bypassed or if an encoded representation of the data sample 120B is not received. For example, the neural network 114 can be used to reconstruct data samples associated with lost packets.

FIG. 3 is a diagram of a particular illustrative example of a system 300 that is operable to bundle data representing one or more latent vectors and data representing one or more residual vectors into a single packet. The system 300 includes a packet generator 304. Components of the system 300 can be integrated into the transmission device 102.

The packet generator 304 generates a first packet 340 during a first time instance. Data associated with the first time instance is illustrated in gray in FIG. 3. In the example illustrated in FIG. 3, the packet generator 304 receives latent code 324A representing the latent vector 124A. For example, the latent code 324A can correspond to an encoded (e.g., quantized) version of the latent vector 124A representing the data sample 120A. Additionally, the packet generator 304 receives the residual code 282, which corresponds to an encoded (e.g., quantized) version of the residual vector 280.

In the example illustrated in FIG. 3, the packet generator 304 includes the latent code 324A and the residual code 282 in a first packet 340. The packet generator 304 is also configured to generate a header 342 for the first packet 340. The header 342 can indicate the destination of the first packet 340 and can indicate other properties of the first packet 340. As a non-limiting example, the header 342 can indicate that the first packet 340 includes the latent code 324A, the residual code 282, and possibly other data (e.g., data representing additional data samples or residual vectors). Furthermore, the header 342 can indicate that the reception device 104 can predict (e.g., reconstruct) one or more missing or omitted data samples from the first packet 340 (e.g., the data sample 120B) based on the latent code 324A, latent code 324C from a later packet (e.g., a second packet 350), and the residual code 282. In some implementations, the first packet 340 may include two or more latent codes 324 representing two or more data samples.

The packet generator 304 generates the second packet 350 during a second time instance after the first time instance. In the example illustrated in FIG. 3, the packet generator 304 receives the latent code 324C representing the latent vector 124C. For example, the latent code 324C can correspond to an encoded (e.g., quantized) version of the latent vector 124C representing the data sample 120C. Additionally, the packet generator 304 receives the residual code 382, which corresponds to an encoded (e.g., quantized) version of another residual vector (e.g., a residual vector subsequent to the residual vector 280).

In the example illustrated in FIG. 3, the packet generator 304 includes the latent code 324C and the residual code 382 in the second packet 350. The packet generator 304 is also configured to generate a header 352 for the second packet 350. The header 352 can indicate the destination of the second packet 350 and can indicate other properties of the second packet 350. As a non-limiting example, the header 352 can indicate that the second packet 350 includes the latent code 324C, the residual code 382, and possibly other data. Furthermore, the header 342 can indicate that the reception device 104 can predict (e.g., reconstruct) a missing or omitted data samples based on the latent code 324C, data from a later packet, and the residual code 382.

Although the latent code 324A and the latent code 324C are depicted in different packets 340, 350, in some implementations, the latent code 324A and the latent code 324C can be included in the same packet. Additionally, as described above, in other implementations, latent code representing more than two data samples can be included in a packet. As a non-limiting example, in some implementations, a packet can include data representing five data samples. Although the residual codes 282, 382 are included in the packets 340, 350 in FIG. 3, inclusion of the residual codes 282, 382 is optional. In some implementations, the number of data samples represented in a packet and a determination of whether to include a residual code in a packet can be based on network conditions. For example, if network conditions fail to satisfy a threshold, the residual code 282, 382 can be included in the packets 340, 350.

The system of FIG. 3 enables an accurate representation of data to be transmitted using relatively few bits. For example, encoding of the data sample 120B can be bypassed and data representing nearby data samples 120A, 120C can be packetized and transmitted as described above. Thus, encoding and transmission of the data sample 120B can be bypassed at the transmission device 102 to reduce the amount of data bits that are transmitted, and the reception device 104 can reconstruct an accurate representation of the data sample 120B based on reconstructions of the nearby data samples 120A, 120C using the machine-learning predictive coding described herein. As a result, the reception device 104 can generate a more accurate representation of the data sample 120B although transmission of an encoded representation of the data sample 120B is bypassed.

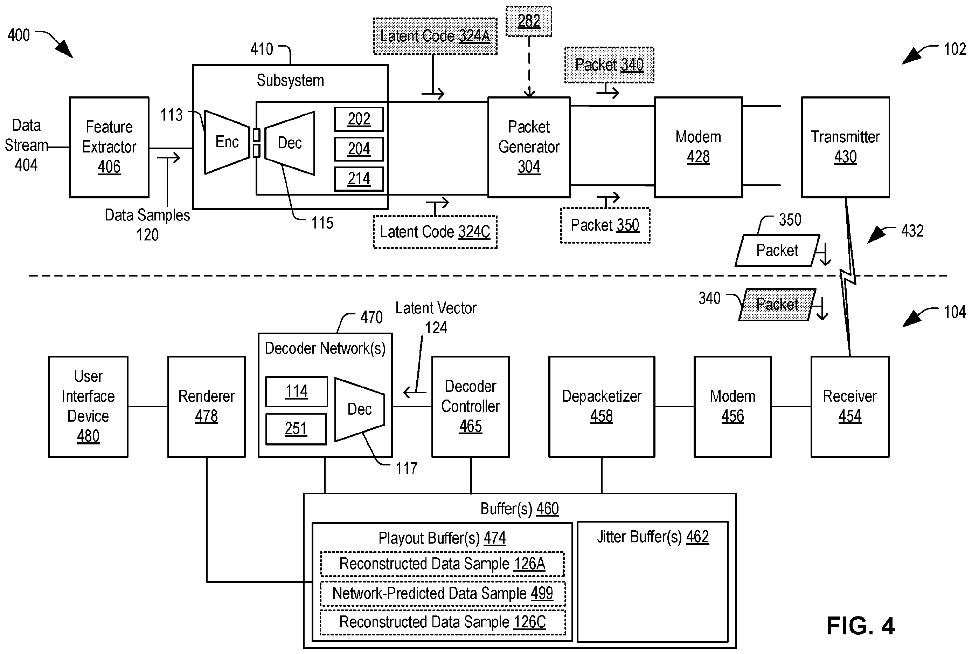

FIG. 4 is a diagram of a particular illustrative example of a system 400 including two or more devices configured to communicate via transmission of encoded data. The example of FIG. 4 shows the transmission device 102 that is configured to encode and transmit data and the reception device 104 that is configured to receive, decode, and use the data. Although the system 400 illustrates one transmission device 102, the system 400 can include more than one transmission device 102. For example, a two-way communication system may include two devices (e.g., mobile phones), and each of the devices may transmit data to and receive data from the other device. That is, each device may act as both a transmission device 102 and a reception device 104. In another example, a single reception device 104 can receive data from more than one transmission device 102. Additionally, or alternatively, the system 400 can include more than one reception device 104. For example, a single transmission device 102 may transmit (e.g., multicast or broadcast) data to multiple reception devices 104. Thus, the one-to-one pairing of the transmission device 102 and the reception device 104 illustrated in FIG. 4 is merely illustrative of one configuration and is not limiting.

In the example of FIG. 4, the transmission device 102 includes a plurality of components arranged to obtain data from a data stream 404 and to process the data to generate data packets (e.g., the first packet 340 and the second packet 350) that are transmitted over a transmission medium 432. In FIG. 4, the components of the transmission device 102 include a feature extractor 406, a subsystem 410, the packet generator 304, a modem 428, and a transmitter 430. The subsystem 410 includes the encoder portion 113 of the FRAE 110 and the decoder portion 115 of the FRAE 110. The subsystem 410 also includes one or more of the neural network 214, the residual determination unit 202, and the codebook 204. In other examples, the transmission device 102 may include more, fewer, or different components. To illustrate, in some examples, the transmission device 102 includes one or more data generation devices configured to generate the data stream 404. Examples of such data generation devices include, for example and without limitation, microphones, cameras, game engines, media processors (e.g., computer-generated imagery engines), augmented reality engines, sensors, or other devices and/or instructions that are configured to output the data stream 404. To further illustrate, in some examples, the transmission device 102 includes a transceiver instead of the transmitter 430 (or in which the transmitter 430 is disposed).

The data stream 404 in FIG. 4 includes data arranged in a time series. For example, the data stream 404 may include a sequence of time-windowed portions of data. In some examples, the data includes media data, such as voice data, audio data, video data, game data, augmented reality data, other media data, or combinations thereof.

The feature extractor 406 is configured to generate the data samples 120 based on the data stream 404. The data samples 120 include data representing a portion of the data stream 404. The feature extraction technique(s) used by the feature extractor 406 may include, for example, data aggregation, interpolation, compression, windowing, domain transformation, sampling, smoothing, statistical analysis, etc. To illustrate, when the data stream 404 includes voice data or other audio data, the feature extractor 406 may be configured to determine time-domain or frequency-domain spectral information descriptive of a time-windowed portion of the data stream 404. In this example, the data samples 120 may include the spectral information. As one non-limiting example, the data samples 120 may include data describing a cepstrum of voice data of the data stream 404, data describing pitch associated with the voice data, other data indicating characteristics of the voice data, or a combination thereof. As another illustrative example, when the data stream 404 includes video data, game data, or both, the feature extractor 406 may be configured to determine pixel information associated with an image frame of the data stream 404. In the same or other examples, the data samples 120 may include other information, such as metadata associated with the data stream 404, compression data (e.g., keyframe identifiers), or other information used by the encoder portion 113 of the FRAE 110.

The encoder portion 113 of the FRAE 110 in the subsystem 410 is configured to encode the data samples 120 to generate the latent vectors (e.g., the latent vectors 124 of FIG. 1). In a particular implementations, the codebook 204 is used to encode each latent vector to generate a corresponding latent code 324. The latent codes 324 are provided to the packet generator 304. The decoder portion 115 of the FRAE 110 in the subsystem is configured to generate reconstructed data samples (e.g., the reconstructed data samples 226 of FIG. 2). The neural network 214 generates a network-predicted data sample (e.g., the network-predicted data sample 250 of FIG. 2) based on the reconstructed data samples, and the residual determination unit 202 can generate residual vectors (e.g. the residual vector 280 of FIG. 2) based on a network-predicted data sample and a corresponding data sample. The residual determination unit 202 provides the residual vector to the codebook 204 to generate a corresponding residual code, which is provided to the packet generator 304.

The packet generator 304 is configured to generate packets based on the latent codes 324 and possibly other data. For example, the packet generator 304 may generate the first packet 340 based on the latent code 324A and a residual code, as described with respect to FIG. 3. In this example, the packet generator 304 may also generate the second packet 350 based on the latent code 324C. It should be understood that each packet 340, 350 can be generated based on data representing a plurality of the data samples 120 instead of based on data representing a single data sample 120. As a non-limiting example, each packet 340, 350 can include data (e.g., latent codes and optionally residual codes) representing eight (8) data samples 120. As another non-limiting example, each packet 340, 350 can include data representing four (4) data samples 120. Additionally, in some implementations, a packet can include more than one residual code.

The modem 428 is configured to modulate a baseband, according to a particular communication protocol, to generate signals representing the first packet 340 and the second packet 350. The transmitter 430 is configured to send the signals representing the packets 340, 350 via the transmission medium 432. The transmission medium 432 may include a wireline medium, an optical medium, or a wireless medium. To illustrate, the transmitter 430 may include or correspond to a wireless transmitter configured to send the signals via free-space propagation of electromagnetic waves.

In FIG. 4, the components of the reception device 104 include a receiver 454, a modem 456, a depacketizer 458, one or more buffers 460, a decoder controller 465 one or more decoder networks 470, a renderer 478, and a user interface device 480. In other examples, the reception device 104 may include more, fewer, or different components. To illustrate, in some examples, the reception device 104 includes more than one user interface device 480, such as one or more displays, one or more speakers, one or more haptic output devices, etc. To further illustrate, in some examples, the reception device 104 includes a transceiver instead of the receiver 454 (or in which the receiver 454 is disposed).

The receiver 454 is configured to receive the signals representative of packets 340, 350 and to provide the signals (after initial signal processing, such as amplification, filtering, etc.) to the modem 456. In some circumstances, the reception device 104 may not receive all of the packets 340, 350 sent by the transmission device 102. For example, one or more of the packets 340, 350 can be lost during transmission. Additionally, or in the alternative, the packets 340, 350 may be received in a different order than they are transmitted by the transmission device 102.

The modem 456 is configured to demodulate the signals to generate bits representing the received packets 340, 350 and to provide the bits representing the received data packets to the depacketizer 458. The depacketizer 458 is configured to extract latent code 324 from the payload of each received packet 340, 350 and to store the latent code 324 at the buffer(s) 460. For example, in FIG. 4, the buffer(s) 460 include jitter buffer(s) 462 configured to store the latent code 324.

In the example illustrated in FIG. 4, a decoder controller 465 retrieves data from the buffer(s) 460 for the decoder network(s) 470. In some implementations, the decoder controller 465 also performs buffer management operations, such as managing a depth of the jitter buffer(s) 462, a depth of a playout buffer(s) 474, or both. If the decoder network(s) 470 include multiple decoders, the decoder controller 465 may also determine which of the decoders to use at a particular time.

To generate the reconstructed data samples 126A, 126C, the decoder controller 465 provides the latent vector 124 to the decoder portion 117 of the decoder networks 470. In a similar manner as described with respect to FIG. 1, the decoder portion 117 can generate the reconstructed data samples 126A, 126C based on the latent vector 124A, 124C. Additionally, the decoder networks 470 can include the neural network 114 that is configured to use machine-learning predictive coding to generate the network-predicted data sample 150. Thus, instead of using pure interpolation techniques to generate an interpolated data sample based on the reconstructed data samples 126A, 126C, the decoder networks 470 implement a non-linear and data-driven neural network model to predict features of the data sample 120B and generate the network-predicted data sample 150 based on the prediction. Optionally, the decoder networks 470 can include the residual reconstruction unit 251. The residual reconstruction unit 251 can modify the network-predicted data sample 150 based on the residual code 282 to generate the modified network-predicted data sample 152. As a result, the network-predicted data sample 150 (or the modified network-predicted data sample 152) can be a more accurate representation of the data sample 120B than a data sample generated based on interpolation. The network-predicted data sample 150 can be generated if encoded data associated with the data sample 120B is lost during transmission or if the transmission device 102 bypassed encoding of the data sample 120B, as described above.

The reconstructed data samples 126A, 126C and a network-predicted data sample 499 may be stored at the buffer(s) 460 (e.g., at one or more playout buffers 474). The network-predicted data sample 499 stored in the buffer(s) 460 can correspond to the network-predicted data sample 150 or the modified network-predicted data sample 152. At a playback time, the renderer 478 retrieves the data samples 126A, 499, 126C from the buffer(s) 460 and processes the data samples 126A, 499, 126C to generate output signals, such as audio signals, video signals, game update signals, etc. The renderer 478 provides the signals to a user interface device 480 to generate a user perceivable output based on the data samples 126A, 150, 126C. For example, the user perceivable output may include one or more of a sound, an image, or a vibration. In some implementations, the renderer 478 includes or corresponds to a game engine that generates the user perceivable output in response to modifying a game state based on the data samples 126A, 150, 126C.

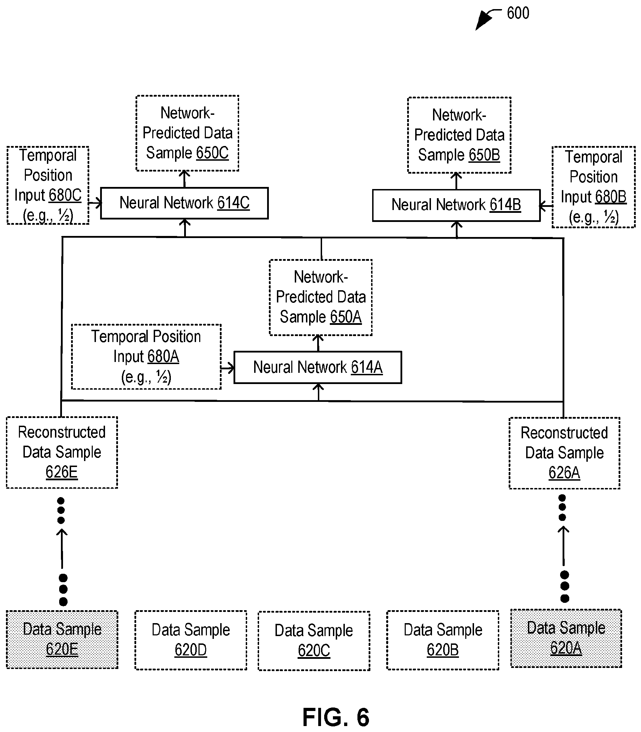

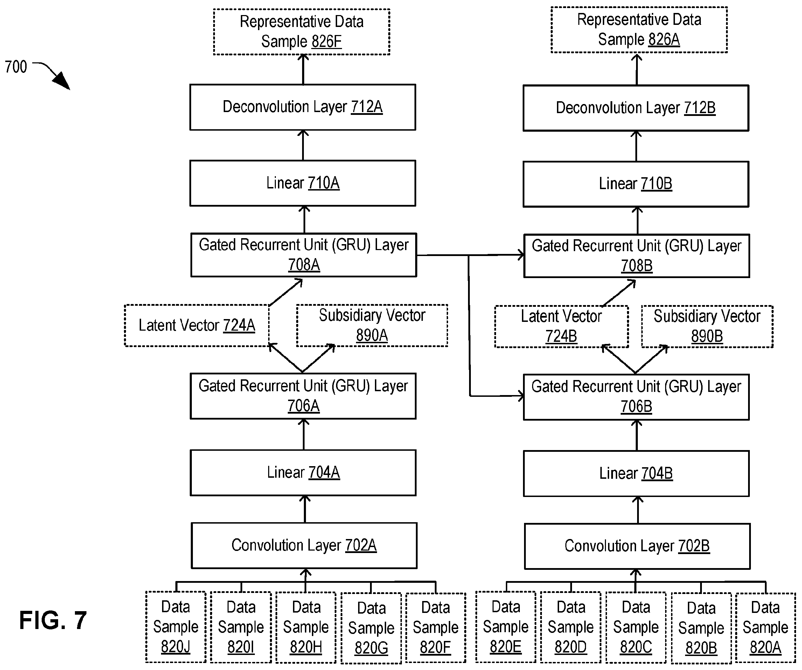

FIG. 5 is a diagram of a particular illustrative example of a neural network architecture 500 that is configured to use machine-learning predictive coding to reconstruct a data sample using nearby reconstructed data. The neural network architecture 500 can be integrated into the neural network 114, the neural network 214 one or more neural networks 614A-614C of FIG. 6, one or more of the neural networks 714A-714D of FIG. 7, or a combination thereof.

The neural network architecture 500 includes a convolution layer 502, a fully connected layer 504, a GRU layer 506, a fully connected layer 508, and a deconvolution layer 510. During operation, a reconstructed data sample 526A and a reconstructed data sample 526C are provided as input to the convolution layer 502. According to one implementation, the reconstructed data samples 526A, 526C correspond to the reconstructed data samples 126A, 126C or the reconstructed data samples 226.

The convolution layer 502 is configured to apply a convolution operation to an input (e.g., the reconstructed data samples 526A, 526C) and provide an output vector of the convolution operation to the fully connected layer 504. The fully connected layer 504 is a feed-forward neural network that includes multiple input nodes and generates one or more outputs based on different weighting and mapping functions. According to some implementations, a fully connected layer can include multiple node levels (e.g., input level nodes, intermediate level nodes, and output level nodes) that have unique weighting and mapping patterns. For ease of explanation, the fully connected layer 504 is described as receiving one or more inputs (e.g., the output vector of the convolution layer 502) and generating one or more outputs based on neural network operations. However, it should be understood that the architecture of each fully connected layer described herein can be unique and can have unique weighting and mapping patterns as to generate simple or complex neural networks. The fully connected layer 504 is configured to generate one or more outputs based on the output vector of the convolution layer 502 and to provide the one or more outputs to the GRU layer 506.

The GRU layer 506 is configured to generate a data state that is provided to the fully connected layer 508. The GRU layer 506 can also receive feedback (e.g., recurrent states) associated with previous time steps. For example, the GRU layer 506 can access recurrent states from nearby time steps to generate the data state. The data state generated by the GRU layer 506 is provided to the fully connected layer 508. The fully connected layer 508 is configured to generate an output based on the data state generated by the GRU layer 506, and the deconvolution layer 510 is configured to generate a network-predicted data sample 550 based on the output of the fully connected layer 508. According to one implementation, the network-predicted data sample 550 corresponds to the network-predicted data sample 150 or the network-predicted data sample 250.

FIG. 6 is a diagram of a particular illustrative example of a system 600 that is configured to use machine-learning predictive coding to reconstruct multiple data samples for varying temporal positions. In the example illustrated in FIG. 6, the system 600 includes one or more neural networks (e.g., one or more predictive coding networks) illustrated in FIG. 6 as neural network 614A, neural network 614B, and neural network 614C. In some implementations, the neural network 614A-614C are instances of a single neural network (e.g., one set of code corresponding to the neural networks is executed multiple times, including a first time to perform operations associated with neural network 614A, a second time to perform operations associated with neural network 614B, and a third time to perform operations associated with neural network 614C. In other implementations, one or more of the neural network 614A-614C is distinct from the others. To illustrate, the neural network 614A may be distinct from the neural networks 614B and 614C. The system 600 can be integrated into the transmission device 102, the reception device 104, or both.

In the example of FIG. 6, five data samples 620 are illustrated. For example, FIG. 6 depicts a data sample 620A, a data sample 620B, a data sample 620C, a data sample 620D, and a data sample 620E. The data sample 620A includes data (e.g., extracted features) generated at an earlier time instance than data included in the data sample 620B, the data sample 620B includes data generated at an earlier time instance than data included in the data sample 620C, etc. According to some implementations, adjacent data samples 620 can include overlapping data (e.g., temporal redundancies). For example, a portion of the data in the data sample 620A can also be included in the data sample 620B. In some examples, the data included in the data samples 620 includes media data, such as voice data, audio data, video data, game data, augmented reality data, other media data, or combinations thereof.

In a similar manner as the data samples 120A, 120C of FIG. 1, in the example of FIG. 6, the data samples 620A, 620E can be encoded by an encoder, such as the encoder portion 113 of the FRAE 110. After the data samples 620A, 620E are encoded, in a similar manner as described above, a decoder (e.g., the decoder portion 115 of the transmission device 102, the decoder portion 117 of the reception device 104, or both) can reconstruct the data samples 620A, 620E to generate reconstructed data samples 626A, 626E.

To reduce the amount of data bits that are transmitted to the reception device 104, the system 600 can bypass encoding operations on particular data samples, such as the data samples 620B-620D. As described below, in these scenarios, the data samples 620B-620D that do not undergo encoding operations can be reconstructed using machine-learning predictive coding (e.g., the neural networks 614A-614C). For ease of illustration and description, the data samples 620B-620D that do not undergo encoding operations are unshaded and are referred to as "predicted data samples."

To predict and reconstruct the data sample 620C, the reconstructed data sample 626A and the reconstructed data sample 626E are provided as inputs to the neural network 614A. In some implementations, a temporal position input 680A is provided to the neural network 614A to indicate a temporal position of the data sample 620C relative to the data samples 620A, 620E. In the example of FIG. 6, the temporal position input 680A has a value of one-half (1/2). That is, because the data sample 620C to be predicted is halfway between the data samples 620A, 620E used to generate the data inputs to the neural network 614A, providing the value of one-half as the temporal position input 680A indicates to the neural network 614A to predict a data sample that is halfway between the two input data samples. In other implementations, the temporal position input 680A is omitted. For example, the neural network 614A may be configured for a specific temporal position of the predicted data sample relative to one or both of the reconstructed data samples 626A and 626E that are used as reference samples. To illustrate, the neural network 614A may be selected for use by the decoder controller 465 of FIG. 4 because the neural network 614A is configured to predict a data sample that is halfway between the two input data samples and the data sample to be predicted is halfway between the reconstructed data samples 626A and 626E. In such implementations, other neural networks may be configured for other temporal positions of the predicted data sample.

The neural network 614A is configured to use machine-learning predictive coding to generate a network-predicted data sample 650A. The network-predicted data sample 650A corresponds to a predicted version of the data sample 620C disposed between the data sample 620A and the data sample 620E. Thus, instead of using pure interpolation techniques to generate an interpolated data sample based on the reconstructed data samples 626A, 626E, the system 600 implements a non-linear and data-driven neural network model to predict features of the data sample 620C and generates the network-predicted data sample 650A based on the prediction. As a result, the network-predicted data sample 650A is a more accurate representation of the data sample 620C than a data sample generated based solely on interpolation.

Optionally, an input can be provided to the neural network 614A indicating whether the input data samples 626A, 626E are based on reference data samples. In the example above, the input data samples 626A, 626E are based on reference data samples 620A, 620E (e.g., are not predicted using a neural network). Thus, in this scenario, the neural network 614A may weight each input equally.

To predict and reconstruct the data sample 620B, the reconstructed data sample 626A and the network-predicted data sample 650A are provided as inputs to the neural network 614B. A temporal position input 680B may also be provided to the neural network 614B to indicate a temporal position of the data sample 620B relative to the data samples 620A, 620C. In the example of FIG. 6, the temporal position input 680B has a value of one-half (1/2). That is, because the data sample 620B to be predicted is halfway between the data samples 620A, 620C associated with the data inputs to the neural network 614B, providing the value of one-half as the temporal position input 680B indicates to the neural network 614B to predict a data sample that is halfway between the two input data samples. The neural network 614B is configured to use machine-learning predictive coding to generate a network-predicted data sample 650B. The network-predicted data sample 650B corresponds to a predicted version of the data sample 620B disposed between the data sample 620A and the data sample 620C. Thus, instead of using pure interpolation techniques to generate an interpolated data sample based on the data samples 626A, 650A, the system 600 implements a non-linear and data-driven neural network model to predict features of the data sample 620B and generates the network-predicted data sample 650B based on the prediction. As a result, the network-predicted data sample 650B is a more accurate representation of the data sample 620B than a data sample generated based solely on interpolation.

Optionally, an input can be provided to the neural network 614B indicating whether the input data samples 626A, 650A are based on reference data samples. In the example above, the reconstructed data sample 626A is based on a reference data sample 620A (e.g., is not predicted using a neural network); however, the network-predicted data sample 650A is based on a predicted data sample. Thus, in this scenario, the neural network 614B may assign more value (e.g., a heavier weight) to the reconstructed data sample 626A.

To predict and reconstruct the data sample 620D, the reconstructed data sample 626E and the network-predicted data sample 650A are provided as inputs to the neural network 614C. A temporal position input 680C may also be provided to the neural network 614C to indicate a temporal position of the data sample 620D relative to the data samples 620C, 620E. In the example of FIG. 6, the temporal position input 680C has a value of one-half (1/2). That is, because the data sample 620D to be predicted is halfway between the data samples 620C, 620E associated with the data inputs to the neural network 614C, providing the value of one-half as the temporal position input 680C indicates to the neural network 614C to predict a data sample that is halfway between the two input data samples. The neural network 614C is configured to use machine-learning predictive coding to generate a network-predicted data sample 650C. The network-predicted data sample 650C corresponds to a predicted version of the data sample 620D timing between the data sample 620C and the data sample 620E. Thus, instead of using pure interpolation techniques to generate an interpolated data sample based on the data samples 650A, 626E, the system 600 implements a non-linear and data-driven neural network model to predict features of the data sample 620D and generates the network-predicted data sample 650C based on the prediction. As a result, the network-predicted data sample 650C is a more accurate representation of the data sample 620D than a data sample generated based solely on interpolation.

Optionally, an input can be provided to the neural network 614C indicating whether the input data samples 626E, 650A are based on reference data samples. In the example above, the reconstructed data sample 626E is based on a reference data sample 620E (e.g., is not predicted using a neural network); however, the network-predicted data sample 650A is based on a predicted data sample. Thus, in this scenario, the neural network 614C may assign more value (e.g., a heavier weight) to the reconstructed data sample 626E.

Although each temporal position input 680 has a value of one-half in the example of FIG. 6, in other implementations, a particular temporal position input 680 can have a different value based on the temporal position of the data sample 620 to be predicted relative to the input data samples of the neural network 614. As a non-limiting example, if the neural network 614B is to predict and reconstruct the data sample 620B based on reconstructed data samples 626A, 626E, the temporal position input 680B would have a value of four-fifths (4/5). According to another implementation, the temporal position inputs 680 can indicate a number of data samples between the data samples associated with the input to the neural network 614 and whether the data samples associated with the input to the neural network 614 are reference data samples.

FIG. 7 is a diagram of a FRAE architecture 700 that is configured to generate a single latent vector and a subsidiary vector 890 for multiple data samples. In the example illustrated in FIG. 7, two time steps of the FRAE are illustrated in an unrolled manner (e.g., side-by-side) to facilitate description of timewise interactions within the FRAE. According to one implementation, the FRAE architecture 700 can be integrated into a FRAE, such as the FRAE 110 of FIG. 1.

The FRAE architecture 700 includes a convolution layer 702, a linear layer 704, a GRU layer 706, a GRU layer 708, a linear layer 710, and a deconvolution layer 712. In the example of FIG. 7, multiple instances of each layer 702-712 are illustrated. For example, a first instance of the convolution layer 702A and a second instance of the convolution layer 702B are illustrated. Each instance of the convolution layer 702A, 702B can be indicative of common circuitry that perform operations at different times. For example, the first instance of the convolution layer 702A can correspond to the convolution layer 702 performing operations at a first time, and the second instance of the convolution layer 702B can correspond to the convolution layer 702 performing operations at a second time. In a similar manner, in the example of FIG. 7, there are multiple instances of the linear layer 704A, 704B, multiple instances of the GRU layer 706A, 706B, multiple instances of the GRU layer 708A, 708B, multiple instances of the linear layer 710A, 710B, and multiple instances of the deconvolution layer 712A, 712B. The FRAE architecture 700 enables the use of machine-learning predictive coding for larger size packets. To illustrate, in the example of FIG. 7, five data samples 820E-820A can be associated with a current packet, and five data samples 820F-820J can be associated with a previous packet.

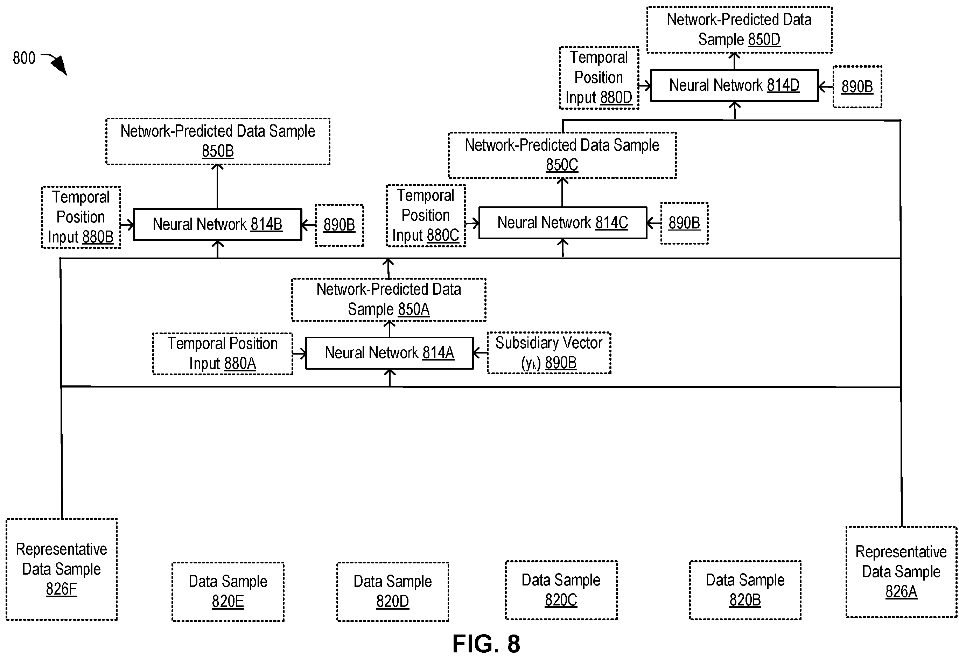

During a first time instance, each data sample 820J-820F associated with the previous packet is input into the FRAE architecture 700. To illustrate, the data samples 820J-820F are provided to the convolution layer 702A at the same time. The data samples 820J-820F can undergo processing by the convolution layer 702A, the linear layer 704A, and the GRU layer 706A. Based on the processing, the data samples 820J-820F can be encoded to generate a single latent vector 724A. Thus, instead of generating a latent vector for each data sample 820J-820F, the FRAE architecture 700 generates a single latent vector 724A representative of the data samples 820J-820F. Additionally, the FRAE architecture 700 is configured to generate a subsidiary vector 890A. The subsidiary vector 890A indicates transition characteristics between two sets of data samples. According to one implementation, the subsidiary vector 890A indicates transition characteristics of a sound associated with a current packet based on the data samples 820J-820F and a sound associated with a previous packet. For example, the subsidiary vector 890A can indicate whether the transition is smooth, abrupt, a vowel sounding transition, etc. Based on the latent vector 724A, the GRU layer 708A, the linear layer 710A, and the deconvolution layer 712A can generate a representative data sample 826F (e.g., a Cepstrogram or Cepstrum of the data samples 820J-820F). As described with respect to FIG. 8, the representative data sample 826F can be used to predict data samples using machine-learning predictive coding.

During a second time instance, each data sample 820E-820A associated with the current packet is input into the FRAE architecture 700. To illustrate, the data samples 820E-820A are provided to the convolution layer 702B at the same time. The data samples 820E-820A can undergo processing by the convolution layer 702B, the linear layer 704B, and the GRU layer 706B. The GRU layer 706B can receive feedback from the GRU layer 708A such that encodings of the data samples 820E-820A are based on encodings of a previous packet. Based on the processing, the data samples 820E-820A can be encoded to generate a single latent vector 724B. Thus, instead of generating a latent vector for each data sample 820E-820A, the FRAE architecture 700 generates a single latent vector 724B representative of the data samples 820E-820A. Additionally, the FRAE architecture 700 is configured to generate a subsidiary vector 890B. The subsidiary vector 890B indicates transition characteristics between two sets of data samples. According to one implementation, the subsidiary vector 890B indicates transition characteristics of a sound associated with the current packet based on the data samples 820E-820A and a sound associated with the previous packet based on the data samples 820J-802F. For example, the subsidiary vector 890B can indicate whether the transition is smooth, abrupt, a vowel sounding transition, etc. Based on the latent vector 724B, the GRU layer 708B, the linear layer 710B, and the deconvolution layer 712B can generate a representative data sample 826A (e.g., a Cepstrogram or Cepstrum of the data samples 820E-820A). As described with respect to FIG. 8, the representative data sample 826A can be used to predict data samples using machine-learning predictive coding.

As described with respect to FIG. 8, the subsidiary vector 890 can be used by neural networks to predict and reconstruct one or more data samples. For example, because the subsidiary vector 890 indicates properties (e.g., transition characteristics) of data samples to be predicted, the neural networks can use the subsidiary vector 890 to improve data sample reconstruction.

FIG. 8 is a diagram of another particular illustrative example of a system 800 that is configured to use machine-learning predictive coding to reconstruct multiple data samples at varying temporal positions. The system 800 can be integrated into the transmission device 102, the reception device 104, or both. In the example of FIG. 8, six data samples 820 are illustrated. For example, FIG. 8 depicts the representative data sample 826A, the data sample 820B, the data sample 820C, the data sample 820D, the data sample 820E, and the representative data sample 826F.

In the example illustrated in FIG. 8, the system 800 includes one or more neural networks (e.g., one or more predictive coding networks) illustrated in FIG. 8 as neural network 814A, neural network 814B, and neural network 814C. In some implementations, the neural network 814A-814C are instances of a single neural network (e.g., one set of code corresponding to the neural networks is executed multiple times, including a first time to perform operations associated with neural network 814A, a second time to perform operations associated with neural network 814B, and a third time to perform operations associated with neural network 814C). In other implementations, one or more of the neural network 814A-814C is distinct from the others. To illustrate, the neural network 814A may be distinct from the neural networks 814B and 814C.

As described with respect to FIG. 7, to reduce the amount of data bits that are transmitted to the reception device 104, individual encoding of the data samples 820E-820A is bypassed and the data samples 820E-820A are jointly coded to generate the latent vector 724B, which can be reconstructed at the reception device 104 to generate the representative data sample 826A. A similar process can be performed with respect to the latent vector 724A to generate the representative data sample 826F.

The techniques described with respect to FIG. 8 enable the reception device 104 to reconstruct the data samples 820E-820B using the representative data samples 826A, 826F. To predict and reconstruct the data sample 820D, the representative data sample 826A and the representative data sample 826F are provided as inputs to the neural network 814A. A temporal position input 880A is provided the neural network 814A to indicate a relative timing of the data sample 820D to the data samples 820A, 820F. In the example of FIG. 8, the temporal position input 880A has a value of two-fifths (2/5). That is, because the data sample 820D to be predicted is two-fifths of the way between the data samples 820A, 820F used to generate the data inputs to the neural network 814A, providing the value of two-fifths as the temporal position input 880A indicates to the neural network 814A to predict a data sample that is two-fifths of the way between the two input data samples. To illustrate, the data sample 820E is one data sample away from the representative data sample 826F, the data sample 820D is two data samples away from the representative data sample 826F, the data sample 820C is three data samples away from the representative data sample 826F, the data sample 820B is four data samples away from the representative data sample 826F, and the representative data sample 826A is five data samples away from the representative data sample 826F. Because the data sample 820D to be predicted is two data samples away from the representative data sample 826F and the inputs (e.g., the representative data samples 826F, 826A) to the neural network 814A are five data samples away from each other, the temporal position input 880A has a value of two-fifths (2/5).

The neural network 814A is configured to use machine-learning predictive coding to generate a network-predicted data sample 850A. The network-predicted data sample 850A corresponds to a predicted version of the data sample 820D disposed in-between the data sample 820A and the data sample 820F. The subsidiary vector 890B (e.g., a subsidiary vector) is also provided to the neural network 814A. The subsidiary vector 890B indicates transition characteristics between a sound associated with a current packet based on the data samples 820A-820E and a sound associated with a previous packet based at least on the data sample 820F. For example, the subsidiary vector 890B can indicate whether the transition is smooth, abrupt, a vowel sounding transition, etc. As described with respect to FIG. 7, the subsidiary vector 890B is generated by the GRU layer 706B.

To predict and reconstruct the data sample 820E, the representative data sample 826F and the network-predicted data sample 850A are provided as inputs to the neural network 814B. A temporal position input 880B is provided the neural network 814B to indicate a relative timing of the data sample 820E to the data samples 820D, 820F. In the example of FIG. 8, the temporal position input 880B has a value of one-half (1/2). That is, because the data sample 820E to be predicted is halfway between the data samples 820D, 820F used to generate the data inputs to the neural network 814B, providing the value of one-half as the temporal position input 880B indicates to the neural network 814B to predict a data sample that is halfway between the two input data samples. The neural network 814B is configured to use machine-learning predictive coding to generate a network-predicted data sample 850B. The network-predicted data sample 850B corresponds to a predicted version of the data sample 820E between the data sample 820D and the data sample 820F. The subsidiary vector 890 is also provided to the neural network 814B.

To predict and reconstruct the data sample 820C, the representative data sample 826A and the network-predicted data sample 850A are provided as inputs to the neural network 814C. A temporal position input 880C is provided the neural network 814C to indicate a temporal position of the data sample 820C (e.g., relative to the data samples 820D, 820A). In the example of FIG. 8, the temporal position input 880C has a value of one-third (1/3). That is, because the data sample 820C to be predicted is one-third of the way between the data samples 820D, 820A used to generate the data inputs to the neural network 814C, providing the value of one-third as the temporal position input 880C indicates to the neural network 814C to predict a data sample that is one-third of the way between the two input data samples. The neural network 814C is configured to use machine-learning predictive coding to generate a network-predicted data sample 850C. The network-predicted data sample 850C corresponds to a predicted version of the data sample 820C between the data sample 820D and the data sample 820A. The subsidiary vector 890 is also provided to the neural network 814C.

To predict and reconstruct the data sample 820B, the representative data sample 826A and the network-predicted data sample 850C are provided as inputs to the neural network 814D. A temporal position input 880D is provided the neural network 814D to indicate a temporal position of the data sample 820B (e.g., relative to the data samples 820C, 820A). In the example of FIG. 8, the temporal position input 880D has a value of one-half (1/2). That is, because the data sample 820B to be predicted is halfway between the data samples 820C, 820A used to generate the data inputs to the neural network 814D, providing the value of one-half as the temporal position input 880D indicates to the neural network 814D to predict a data sample that is halfway between the two input data samples. The neural network 814D is configured to use machine-learning predictive coding to generate a network-predicted data sample 850D. The network-predicted data sample 850D corresponds to a predicted version of the data sample 820B between the data sample 820C and the data sample 820A. The subsidiary vector 890 is also provided to the neural network 814D.

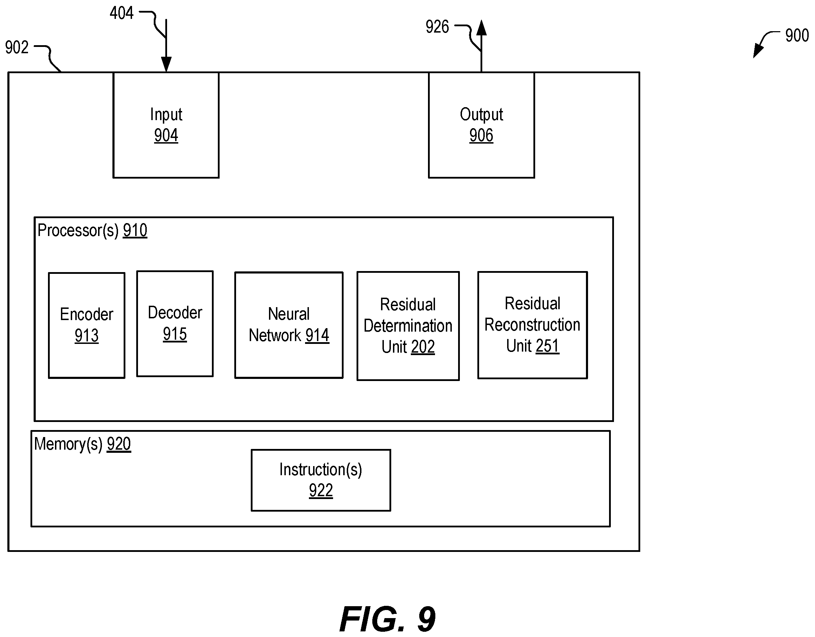

FIG. 9 depicts an implementation 900 in which a device 902 includes one or more processors 910 that include components for encoding and reconstructing data samples as described herein. For example, the one or more processors 910 include an encoder 913, a decoder 915, a neural network 914, the residual determination unit 202, and the residual reconstruction unit 251. The encoder 913 can correspond to the encoder portion 113 of the FRAE 110, the FRAE architecture 700, or both. The decoder 915 can correspond to the decoder portion 115 of the FRAE 110, the decoder portion 117 of the reception device 104, or both. The neural network 914 can correspond to the neural network 114, the neural network 214, the neural network architecture 500, the neural networks 614A-614C, the neural networks 814A-814D, or a combination thereof.

The device 902 also includes an input interface 904 (e.g., one or more wired or wireless interfaces) configured to receive the data stream 404 and an output interface 906 (e.g., one or more wired or wireless interfaces) configured to provide reconstructed data samples 926 to another device, such as to the playout buffer(s) 474 of FIG. 4 or to a playback device (e.g., a speaker). The data stream 404 can include the data samples 120, the data samples 620, the data samples 820, or a combination thereof. The reconstructed data samples 926 can include the reconstructed data samples 126, the network-predicted data sample 150, the reconstructed data samples 226, the modified network-predicted data sample 152, the reconstructed data samples 526, the network-predicted data sample 550, reconstructed data samples 626, the network-predicted data samples 650, the reconstructed data samples 826, the network-predicted data samples 850, or a combination thereof. The device 902 may correspond to a system-on-chip or other modular device that can be integrated into other systems to provide audio encoding and decoding, such as within a mobile phone, another communication device, an entertainment system, or a vehicle, as illustrative, non-limiting examples. According to some implementations, the device 902 may be integrated into a server, a mobile communication device, a smart phone, a cellular phone, a laptop computer, a computer, a tablet, a personal digital assistant, a display device, a television, a gaming console, a music player, a radio, a digital video player, a camera, a navigation device, a headset, an augmented realty headset, a mixed reality headset, a virtual reality headset, a motor vehicle such as a car, or any combination thereof.

In the illustrated implementation 900, the device 902 includes a memory 920 (e.g., one or more memory devices) that includes instructions 922. The device 902 also includes one or more processors 910 coupled to the memory 920 and configured to execute the instructions 922 from the memory 920. In the implementation 900, the encoder 913, the decoder 915, the neural network 914, the residual determination unit 202, and/or the residual reconstruction unit 251 may correspond to or be implemented via the instructions 922. For example, when the instructions 922 are executed by the processor(s) 910, the processor(s) 910 may generate a first reconstructed data sample based on a first latent vector of a FRAE. The processor(s) 910 may further generate a second reconstructed data sample based on a second latent vector of the FRAE. The processor(s) 910 may further provide the first reconstructed data sample and the second reconstructed data sample as inputs to the neural network 914. The neural network 914 is configured to use machine-learning predictive coding to generate a network-predicted data sample.

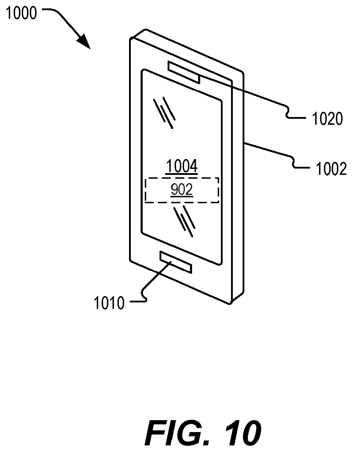

FIG. 10 depicts an implementation 1000 in which the device 902 is integrated into a mobile device 1002, such as a phone or tablet, as illustrative, non-limiting examples. The mobile device 1002 includes a microphone 1010 positioned to primarily capture speech of a user, a speaker 1020 configured to output sound, and a display screen 1004. The device 902 may generate a first reconstructed data sample based on a first latent vector of a FRAE. The device 902 may further generate a second reconstructed data sample based on a second latent vector of the FRAE. The device 902 may further provide the first reconstructed data sample and the second reconstructed data sample as inputs to the neural network 914. The neural network 914 is configured to use machine-learning predictive coding to generate a network-predicted data sample. The network-predicted data sample can be processed and output by the speaker 1020 as sound.

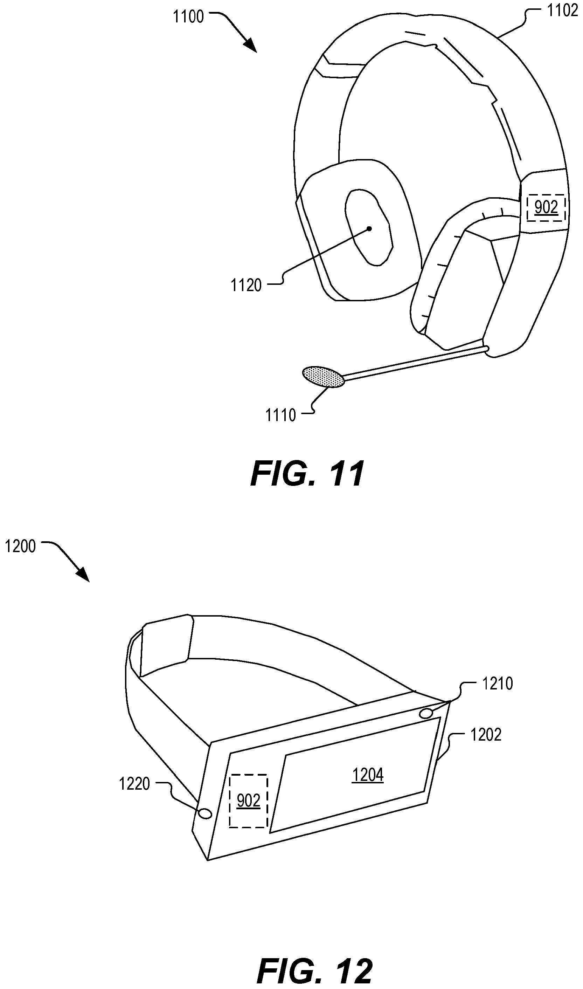

FIG. 11 depicts an implementation 1100 in which the device 902 is integrated into a headset device 1102. The headset device 1102 includes a microphone 1110 positioned to primarily capture speech of a user and one or more earphones 1120. The device 902 may generate a first reconstructed data sample based on a first latent vector of a FRAE. The device 902 may further generate a second reconstructed data sample based on a second latent vector of the FRAE. The device 902 may further provide the first reconstructed data sample and the second reconstructed data sample as inputs to the neural network 914. The neural network 914 is configured to use machine-learning predictive coding to generate a network-predicted data sample. The network-predicted data sample can be processed and output by the earphones 1120 as sound.

FIG. 12 depicts an implementation 1200 in which the device 902 is integrated into a wearable electronic device 1202, illustrated as a "smart watch." The wearable electronic device 1202 can include a microphone 1210, a speaker 1220, and a display screen 1204. The device 902 may generate a first reconstructed data sample based on a first latent vector of a FRAE. The device 902 may further generate a second reconstructed data sample based on a second latent vector of the FRAE. The device 902 may further provide the first reconstructed data sample and the second reconstructed data sample as inputs to the neural network 914. The neural network 914 is configured to use machine-learning predictive coding to generate a network-predicted data sample. The network-predicted data sample can be processed and output by the speaker 1220 as sound.

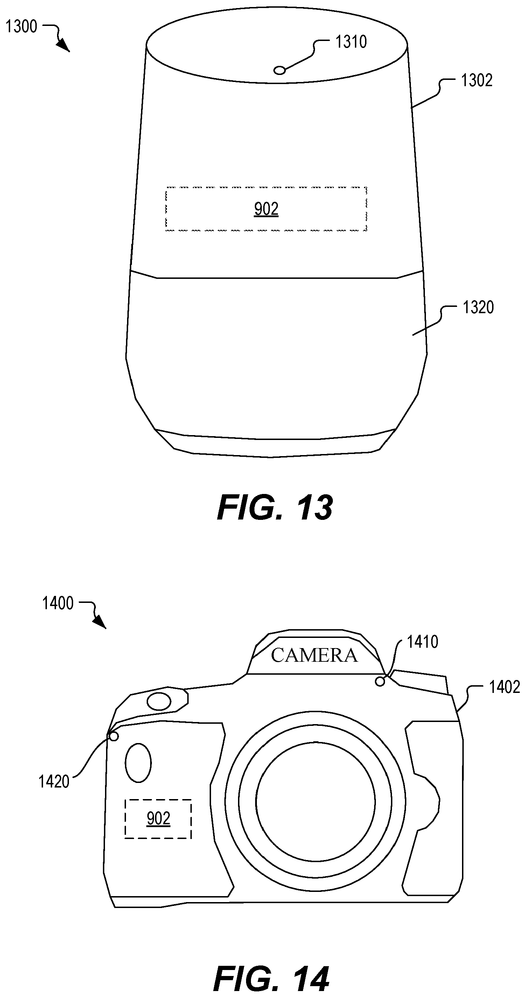

FIG. 13 is an implementation 1300 in which the device 902 is integrated into a wireless speaker and voice activated device 1302. The wireless speaker and voice activated device 1302 can have wireless network connectivity and is configured to execute an assistant operation. The wireless speaker and voice activated device 1302 includes a microphone 1310 and a speaker 1320. The device 902 may generate a first reconstructed data sample based on a first latent vector of a FRAE. The device 902 may further generate a second reconstructed data sample based on a second latent vector of the FRAE. The device 902 may further provide the first reconstructed data sample and the second reconstructed data sample as inputs to the neural network 914. The neural network 914 is configured to use machine-learning predictive coding to generate a network-predicted data sample. The network-predicted data sample can be processed and output by the speaker 1320 as sound.

FIG. 14 depicts an implementation 1400 in which the device 902 is integrated into a portable electronic device that corresponds to a camera device 1402. The camera device 1402 includes a microphone 1410 and a speaker 1420. The device 902 may generate a first reconstructed data sample based on a first latent vector of a FRAE. The device 902 may further generate a second reconstructed data sample based on a second latent vector of the FRAE. The device 902 may further provide the first reconstructed data sample and the second reconstructed data sample as inputs to the neural network 914. The neural network 914 is configured to use machine-learning predictive coding to generate a network-predicted data sample. The network-predicted data sample can be processed and output by the speaker 1420 as sound.

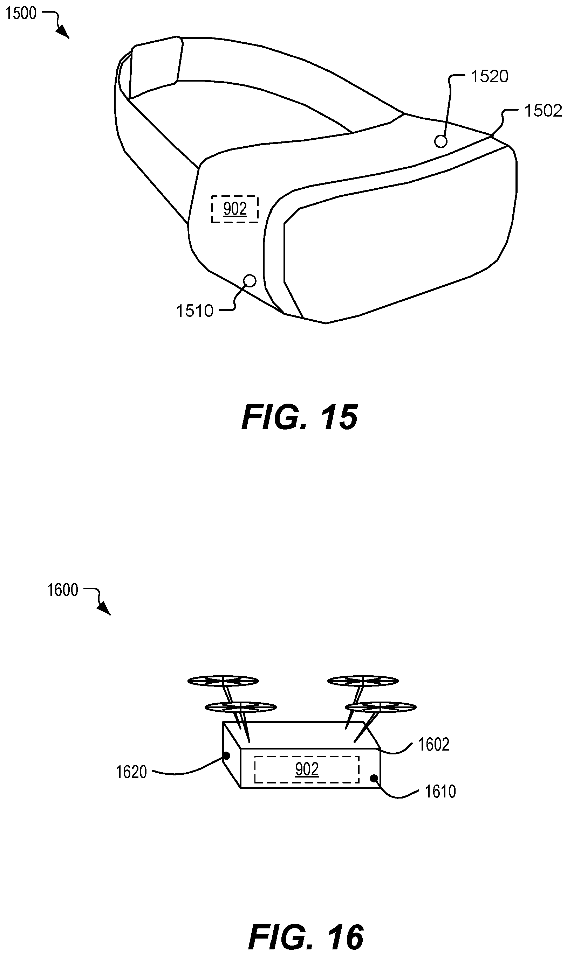

FIG. 15 depicts an implementation 1500 in which the device 902 is integrated into a portable electronic device that corresponds to an extended reality ("XR") headset 1502, such as a virtual reality ("VR"), augmented reality ("AR"), or mixed reality ("MR") headset device. A visual interface device is positioned in front of the user's eyes to enable display of augmented reality or virtual reality images or scenes to the user while the headset 1502 is worn. The device 902 may generate a first reconstructed data sample based on a first latent vector of a FRAE. The device 902 may further generate a second reconstructed data sample based on a second latent vector of the FRAE. The device 902 may further provide the first reconstructed data sample and the second reconstructed data sample as inputs to the neural network 914. The neural network 914 is configured to use machine-learning predictive coding to generate a network-predicted data sample. The network-predicted data sample can be processed and output by a speaker 1520. In a particular example, the visual interface device is configured to display a notification indicating user speech from a microphone 1510 or a notification indicating user speech from the sound output by the speaker 1520.

FIG. 16 depicts an implementation 1600 in which the device 902 corresponds to or is integrated within a vehicle 1602, illustrated as a manned or unmanned aerial device (e.g., a package delivery drone). The vehicle 1602 includes a microphone 1610 and a speaker 1620. The device 902 may generate a first reconstructed data sample based on a first latent vector of a FRAE. The device 902 may further generate a second reconstructed data sample based on a second latent vector of the FRAE. The device 902 may further provide the first reconstructed data sample and the second reconstructed data sample as inputs to the neural network 914. The neural network 914 is configured to use machine-learning predictive coding to generate a network-predicted data sample. The network-predicted data sample can be processed and output by the speaker 1620 as sound.

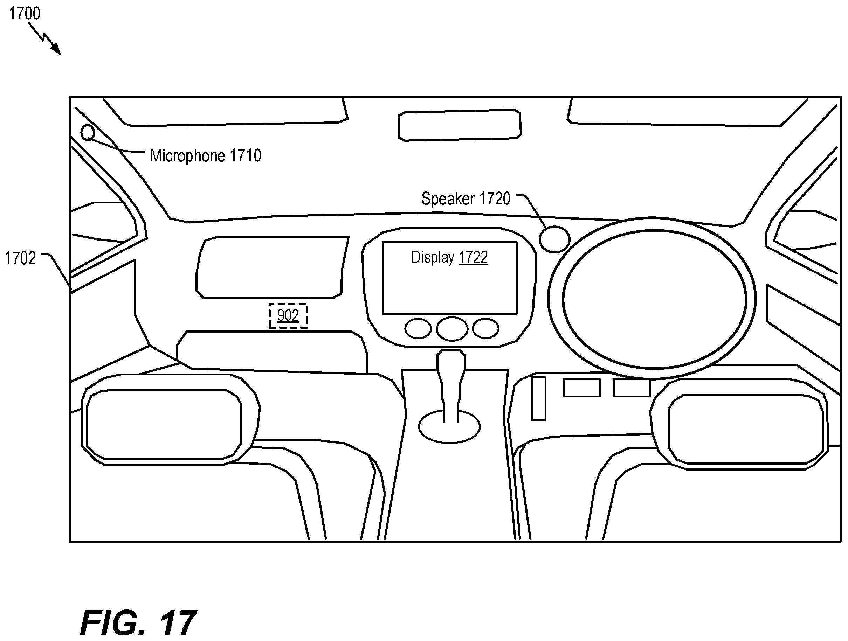

FIG. 17 depicts another implementation 1700 in which the device 902 corresponds to, or is integrated within, a vehicle 1702, illustrated as a car. The vehicle 1702 also includes a microphone 1710 and a speaker 1720. The microphone 1710 is positioned to capture utterances of an operator of the vehicle 1702. The device 902 may generate a first reconstructed data sample based on a first latent vector of a FRAE. The device 902 may further generate a second reconstructed data sample based on a second latent vector of the FRAE. The device 902 may further provide the first reconstructed data sample and the second reconstructed data sample as inputs to the neural network 914. The neural network 914 is configured to use machine-learning predictive coding to generate a network-predicted data sample. The network-predicted data sample can be processed and output by the speaker 1720 as sound. One or more operations of the vehicle 1702 may be initiated based on one or more keywords (e.g., "unlock", "start engine", "play music", "display weather forecast", or another voice command) detected, such as by providing feedback or information via a display 1722 or the speaker 1720.

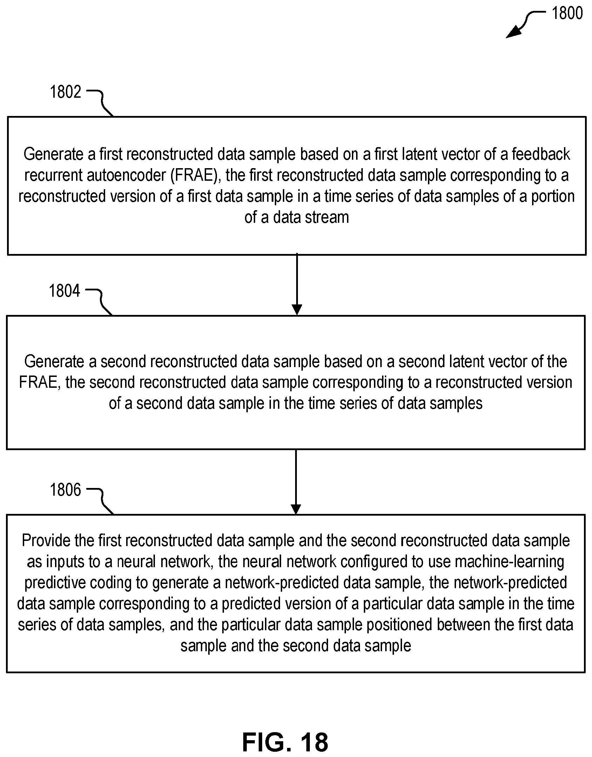

FIG. 18 is a flowchart of a particular example of a method 1800 of operation of a communications device. In various implementations, the method 1800 may be performed by one or more of the system 100 of FIG. 1, the system 200 of FIG. 2, the system 400 of FIG. 4, the transmission device 102, the reception device 104, the neural network architecture 500 of FIG. 5, the system 600 of FIG. 6, the FRAE architecture 700, or the system 800 of FIG. 8.

In the example of FIG. 18, the method 1800 includes generating a first reconstructed data sample based on a first latent vector of a FRAE, at block 1802. The first reconstructed data sample corresponds to a reconstructed version of a first data sample in a time series of data samples of a portion of a data stream. For example, referring to FIG. 1, the decoder portion 117 generates the reconstructed data sample 126A based on the latent vector 124A of the FRAE 110. The reconstructed data sample 126A corresponds to a reconstructed version of the data sample 120A in the time series of data samples 120 of a portion of the data stream 404.

The method 1800 also includes generating a second reconstructed data sample based on a second latent vector of the FRAE, at block 1804. The second reconstructed data sample corresponds to a reconstructed version of a second data sample in the time series of data samples. For example, referring to FIG. 1, the decoder portion 117 generates the reconstructed data sample 126C based on the latent vector 124C of the FRAE 110. The reconstructed data sample 126C corresponds to a reconstructed version of the data sample 120C in the time series of data samples 120.

The method 1800 also includes providing the first reconstructed data sample and the second reconstructed data sample as inputs to a neural network, at block 1806. The neural network is configured to use machine-learning predictive coding to generate a network-predicted data sample. The network-predicted data sample corresponds to a predicted version of a particular data sample in the time series of data samples, and the particular data sample is disposed in-between the first data sample and the second data sample. For example, referring to FIG. 1, the reconstructed data samples 126A, 126C are provided as inputs to the neural network 114. The neural network 114 uses machine-learning predictive coding to generate the network-predicted data sample 150, which corresponds to a predicted version of the data sample 120B in the time series of data samples 120. The data sample 120B is disposed in-between the data sample 120A and the data sample 120C.

The method 1800 includes determining a residual vector associated with the network-predicted data sample. For example, referring to FIG. 2, the residual determination unit 202 determines the residual vector 280 associated with the network-predicted data sample 250. The residual vector 280 can be determined based on a comparison of the data sample 120B and the network-predicted data sample 250. The method 1800 can also include quantizing the residual vector using a codebook to generate a residual code. For example, referring to FIG. 2, the residual vector 280 is quantized using the codebook 204 to generate the residual code 282. The method 1800 can also include transmitting the residual code to a receiving device. For example, referring to FIGS. 3 and 4, the transmission device 102 transmits the residual code 282 to the reception device 104 as part of the first packet 340. Because transmitting the residual code 282 as part of the first packet 340 increases the number of bits that are transmitted, in some scenarios, the residual vector 280 is determined and quantized in response to a determination that network conditions fail to satisfy a threshold. As a non-limiting example, if network traffic is above a particular threshold such that the network is relatively congested, the residual vector 280 can be determined, quantized, and transmitted because the likelihood of packet loss is relatively high. However, if network traffic is below the particular threshold, the transmission device 102 can bypass determination of the residual vector 280.

According to one implementation, the method 1800 includes providing the network-predicted data sample and the first reconstructed data sample as inputs to a neural network. The neural network is configured to use the machine-learning predictive coding to generate another network-predicted data sample. The other network-predicted data sample corresponds to a predicted version of another particular data sample in the time series of data samples, and the other particular data sample is disposed in-between the first data sample and the particular data sample. For example, referring to FIG. 6, the network-predicted data sample 650A and the reconstructed data sample 626A are provided as inputs to the neural network 614B. The neural network 614B uses the machine-learning predictive coding to generate the network-predicted data sample 650B. The network-predicted data sample corresponds to a predicted version of the data sample 620B that is disposed in-between the data sample 620A and the data sample 620C. According to one implementation, the method 1800 also includes providing a temporal position input to the neural network. The temporal position input indicates a temporal position of the other particular data sample (e.g., relative to the first data sample and the particular data sample). For example, referring to FIG. 18, the temporal position input 680B is provided to the neural network 614B to indicate a temporal position of the data sample 620B.

According to one implementation where the method 1800 is performed by a transmitting device, the method 1800 includes transmitting data representing the first latent vector to a receiving device as part of a first packet. For example, referring to FIG. 4, the transmission device 102 transmits the latent code 324A (which corresponds to data representing a first latent vector) to the reception device 104 as part of the first packet 340. The first packet 340 has a relatively small number of bits dedicated to the data sample 120B. For example, in some scenarios, the first packet 340 does not include any dedicated bits for the data sample 120B. In these scenarios, the data sample 120B is reconstructed using the machine-learning predictive coding, as described above. In other scenarios, the first packet 340 has a small number of bits dedicated to the data sample 120B. For example, data associated with the residual code 282 is included in the first packet 340 and is used to reconstruct the data sample 120B at the reception device 104. The method 1800 can also include transmitting data representing a second latent vector to the receiving device as part of a second packet. For example, referring to FIG. 4, the transmission device 102 transmits the latent code 324C (which corresponds to data representing a second latent vector) to the reception device 104 as part of the second packet 350.

According to one implementation where the method 1800 is performed by a receiving device, the method 1800 includes receiving data representing the first latent vector from a transmitting device. For example, referring to FIG. 4, the reception device 104 receives the latent code 324A from the transmission device 102, where the latent code 324A includes or corresponds to data representing the latent vector 124A. The method 1800 can also include receiving data representing the second latent vector from the transmitting device. For example, referring to FIG. 4, the reception device 104 receives the latent code 324C from the transmission device 102, where the latent code 324C includes or corresponds to data representing the latent vector 124C.

According to one implementation where the method 1800 is performed by a receiving device, the method 1800 includes receiving a residual code from the transmitting device. For example, referring to FIGS. 3 and 4, the reception device 104 receives the residual code 282 from the transmission device 102 as part of the first packet 340. The method 1800 can also include modifying the network-predicted data sample based on the residual code. For example, referring to FIG. 2, the residual reconstruction unit 251 modifies the network-predicted data sample 150 based on the residual code 282 to generate the modified network-predicted data sample 152.

The method 1800 of FIG. 18 enables an accurate representation of data to be transmitted using relatively few bits. For example, by using machine-learning predictive coding (e.g., the neural network 114) to reconstruct the data sample 120B based on reconstructions of nearby data samples 120A, 120C (e.g., based on the reconstructed data samples 126A, 126C), a network-predicted data sample 150 of the data sample 120B can be generated. As a result, encoding and transmission of the data sample 120B can be bypassed at the transmission device 102 to reduce the amount of data bits that are transmitted, and the reception device 104 can reconstruct an accurate representation of the data sample 120B (e.g., the modified network-predicted data samples 152) based on reconstructions (e.g., the reconstructed data samples 126A, 126C) of the nearby data samples 120A, 120C using the neural network 114. Thus, the reception device 104 can generate a relatively accurate representation of the data sample 120B even if transmission of an encoded representation of the data sample 120B is bypassed or if an encoded representation of the data sample 120B is not received. For example, the neural network 114 can be used to reconstruct data samples associated with lost packets.

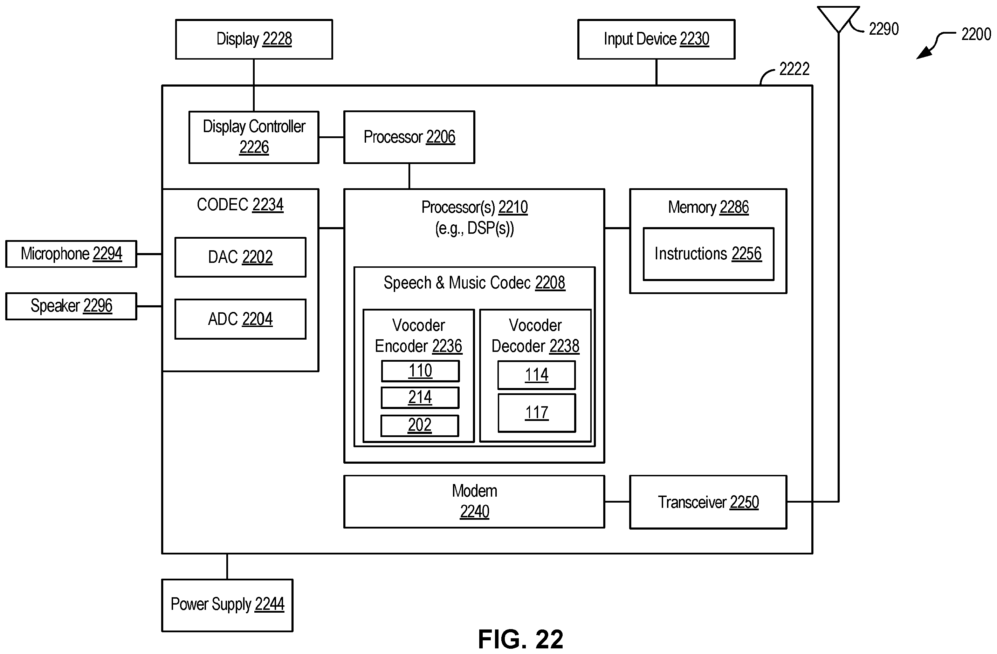

The method 1800 of FIG. 18 may be implemented by a field-programmable gate array (FPGA) device, an application-specific integrated circuit (ASIC), a processing unit such as a central processing unit (CPU), a digital signal processor (DSP), a graphics processing unit (GPU), a controller, another hardware device, firmware device, or any combination thereof. As an example, the method 1800 of FIG. 18 may be performed by a processor that executes instructions, such as described with reference to processor(s) 2210 of FIG. 22.

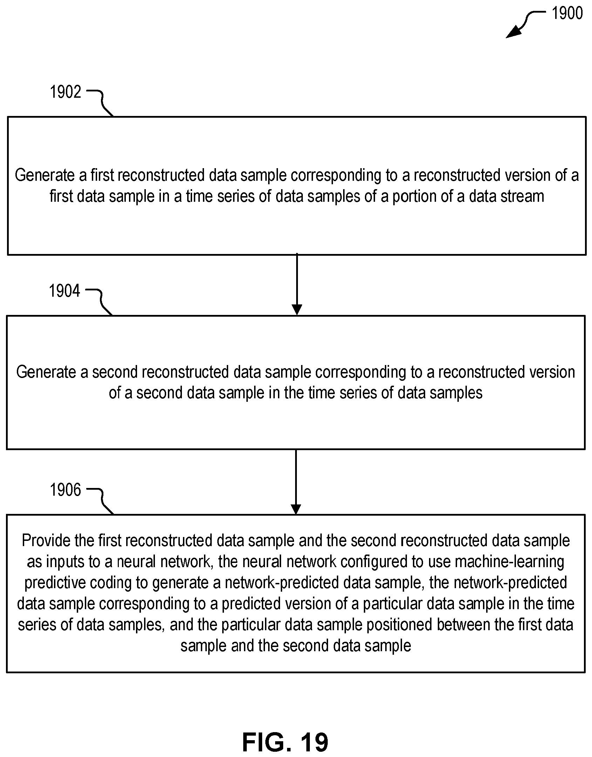

FIG. 19 is a flowchart of another particular example of a method 1900 of operation of a communications device. In various implementations, the method 1900 may be performed by one or more of the system 100 of FIG. 1, the system 200 of FIG. 2, the system 400 of FIG. 4, the transmission device 102, the reception device, the neural network architecture 500 of FIG. 5, the system 600 of FIG. 6, the FRAE architecture 700, or the system 800 of FIG. 8.

In the example of FIG. 19, the method 1900 includes generating a first reconstructed data sample based on a first encoding, at block 1902. The first reconstructed data sample corresponds to a reconstructed version of a first data sample in a time series of data samples of a portion of a data stream. For example, referring to FIG. 1, the decoder portion 117 generates the reconstructed data sample 126A based on the latent vector 124A of the FRAE 110. The reconstructed data sample 126A corresponds to a reconstructed version of the data sample 120A in the time series of data samples 120 of a portion of the data stream 404.

The method 1900 also includes generating a second reconstructed data sample based on a second encoding, at block 1904. The second reconstructed data sample corresponds to a reconstructed version of a second data sample in the time series of data samples. For example, referring to FIG. 1, the decoder portion 117 generates the reconstructed data sample 126C based on the latent vector 124C of the FRAE 110. The reconstructed data sample 126C corresponds to a reconstructed version of the data sample 120C in the time series of data samples 120.

The method 1900 also includes providing the first reconstructed data sample and the second reconstructed data sample as inputs to a neural network, at block 1906. The neural network is configured to use machine-learning predictive coding to generate a network-predicted data sample. The network-predicted data sample corresponds to a predicted version of a particular data sample in the time series of data samples, and the particular data sample is disposed in-between the first data sample and the second data sample. For example, referring to FIG. 1, the reconstructed data samples 126A, 126C are provided as inputs to the neural network 114. The neural network 114 uses machine-learning predictive coding to generate the network-predicted data sample 150, which corresponds to a predicted version of the data sample 120B in the time series of data samples 120. The data sample 120B is disposed in-between the data sample 120A and the data sample 120C.

The method 1900 of FIG. 19 may be implemented by a FPGA device, an ASIC, a processing unit such as a CPU, a DSP, a GPU, a controller, another hardware device, firmware device, or any combination thereof. As an example, the method 1900 of FIG. 19 may be performed by a processor that executes instructions, such as described with reference to processor(s) 2210 of FIG. 22.

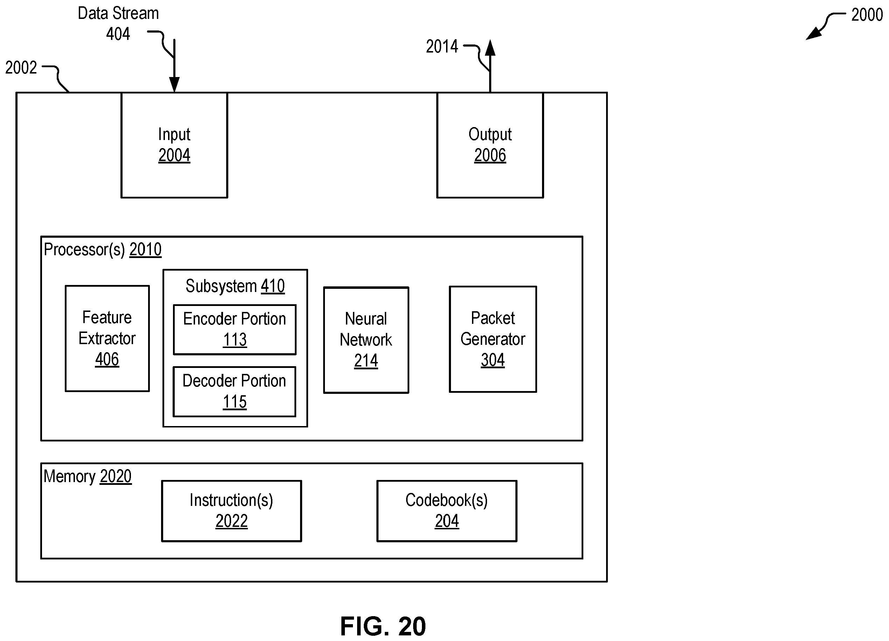

FIG. 20 depicts an implementation 2000 in which a device 2002 includes one or more processors 2010 that include components of the transmission device 102. The device 2002 also includes an input interface 2004 (e.g., one or more bus or wireless interfaces) configured to receive input data, such as the data stream 404, and an output interface 2006 (e.g., one or more bus or wireless interfaces) configured to output data 2014, such as the packets 340, 350. The device 2002 may correspond to a system-on-chip or other modular device that can be integrated into other systems to provide data encoding, such as within a mobile phone, another communication device, an entertainment system, or a vehicle, as illustrative, non-limiting examples. According to some implementations, the device 2002 may be integrated into a server, a mobile communication device, a smart phone, a cellular phone, a laptop computer, a computer, a tablet, a personal digital assistant, a display device, a television, a gaming console, a music player, a radio, a digital video player, a digital video disc (DVD) player, a tuner, a camera, a navigation device, a headset, an augmented reality headset, a mixed reality headset, a virtual reality headset, a motor vehicle such as a car, or any combination thereof.

In the illustrated implementation 2000, the device 2002 includes a memory 2020 (e.g., one or more memory devices) that includes instructions 2022 and one or more codebooks 204. The device 2002 also includes one or more processors 2010 coupled to the memory 2020 and configured to execute the instructions 2022 from the memory 2020. In this implementation 2000, the feature extractor 406, the subsystem 410, the neural network 214, and the packet generator 304 may correspond to or be implemented via the instructions 2022. The subsystem 410 includes the encoder portion 113 and the decoder portion 115. When the instructions 2022 are executed by the processor(s) 2010, the processor(s) 2010 may generate the reconstructed data samples 226 based on the latent vector 124. The processor(s) 2010 may also provide the reconstructed data samples 226 as inputs to the neural network 214 to generate the network-predicted data sample 250.

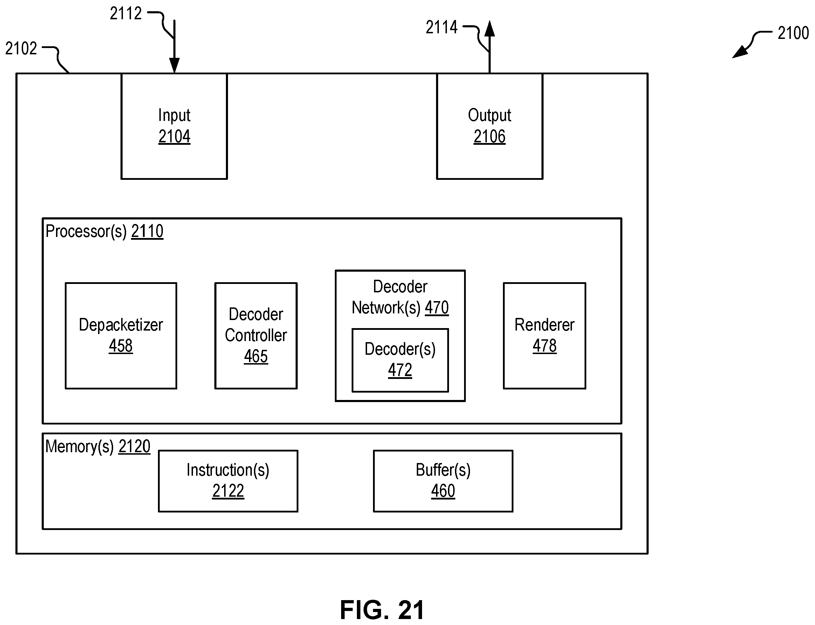

FIG. 21 depicts an implementation 2100 in which a device 2102 includes one or more processors 2110 that include components of the reception device 104. The device 2102 also includes an input interface 2104 (e.g., one or more bus or wireless interfaces) configured to receive input data 2112, such as the packets 340, 350 from the receiver 454 of FIG. 4, and an output interface 2106 (e.g., one or more bus or wireless interfaces) configured to provide output 2114 based on the input data 2112, such as signals provided to the user interface device 480 of FIG. 4. The device 2102 may correspond to a system-on-chip or other modular device that can be integrated into other systems to provide data decoding, such as within a mobile phone, another communication device, an entertainment system, or a vehicle, as illustrative, non-limiting examples. According to some implementations, the device 2102 may be integrated into a server, a mobile communication device, a smart phone, a cellular phone, a laptop computer, a computer, a tablet, a personal digital assistant, a display device, a television, a gaming console, a music player, a radio, a digital video player, a DVD player, a tuner, a camera, a navigation device, a headset, an augmented reality headset, a mixed reality headset, a virtual reality headset, a motor vehicle such as a car, or any combination thereof

In the illustrated implementation 2100, the device 2102 includes a memory 2120 (e.g., one or more memory devices) that includes instructions 2122 and one or more buffers 460. The device 2102 also includes one or more processors 2110 coupled to the memory 2120 and configured to execute the instructions 2122 from the memory 2120. In this implementation 2100, the depacketizer 458, the decoder controller 465, the decoder network(s) 470, the decoder(s) 472, and/or the renderer 478 may correspond to or be implemented via the instructions 2122. For example, when the instructions 2122 are executed by the processor(s) 2110, the processor(s) 2110 may generate the reconstructed data sample 126A based on the latent vector 124A. The processor(s) 2110 may also generate the reconstructed data sample 126C based on the latent vector 124C. The processor(s) 2110 may also provide the reconstructed data samples 126A, 126C as inputs to the neural network 114 to generate the network-predicted data sample 150.

Referring to FIG. 22, a block diagram of a particular illustrative implementation of a device is depicted and generally designated 2200. In various implementations, the device 2200 may have more or fewer components than illustrated in FIG. 22. In an illustrative implementation, the device 2200 may correspond to the transmission device 102, the reception device 104, or both. In an illustrative implementation, the device 2200 may perform one or more operations described with reference to FIGS. 1-21.

In a particular implementation, the device 2200 includes a processor 2206 (e.g., a CPU). The device 2200 may include one or more additional processors 2210 (e.g., one or more DSPs, one or more GPUs, or a combination thereof). The processor(s) 2210 may include a speech and music coder-decoder (CODEC) 2208. The speech and music codec 2208 may include a voice coder ("vocoder") encoder 2236, a vocoder decoder 2238, or both. In a particular aspect, the vocoder encoder 2236 includes the FRAE 110, the neural network 214, and the residual determination unit 202. In a particular aspect, the vocoder decoder 2238 includes the decoder portion 117 and the neural network 114.

The device 2200 also includes a memory 2286 and a CODEC 2234. The memory 2286 may include instructions 2256 that are executable by the one or more additional processors 2210 (or the processor 2206) to implement the functionality described with reference to the transmission device 102, the reception device 104, or both. The device 2200 may include a modem 2240 coupled, via a transceiver 2250, to an antenna 2290.

The device 2200 may include a display 2228 coupled to a display controller 2226. A speaker 2296 and a microphone 2294 may be coupled to the CODEC 2234. The CODEC 2234 may include a digital-to-analog converter (DAC) 2202 and an analog-to-digital converter (ADC) 2204. In a particular implementation, the CODEC 2234 may receive an analog signal from the microphone 2294, convert the analog signal to a digital signal using the analog-to-digital converter 2204, and provide the digital signal to the speech and music codec 2208 (e.g., as the data stream 404 of FIG. 4). The speech and music codec 2208 may process the digital signals. In a particular implementation, the speech and music codec 2208 may provide digital signals (e.g., output from the renderer 478 of FIG. 4) to the CODEC 2234. The CODEC 2234 may convert the digital signals to analog signals using the digital-to-analog converter 2202 and may provide the analog signals to the speaker 2296.

In a particular implementation, the device 2200 may be included in a system-in-package or system-on-chip device 2222 that corresponds to the transmission device 102 or the reception device 104. In a particular implementation, the memory 2286, the processor 2206, the processors 2210, the display controller 2226, the CODEC 2234, and the modem 2240 are included in the system-in-package or system-on-chip device 2222. In a particular implementation, an input device 2230 and a power supply 2244 are coupled to the system-in-package or system-on-chip device 2222. Moreover, in a particular implementation, as illustrated in FIG. 22, the display 2228, the input device 2230, the speaker 2296, the microphone 2294, the antenna 2290, and the power supply 2244 are external to the system-in-package or system-on-chip device 2222. In a particular implementation, each of the display 2228, the input device 2230, the speaker 2296, the microphone 2294, the antenna 2290, and the power supply 2244 may be coupled to a component of the system-in-package or system-on-chip device 2222, such as an interface or a controller. In some implementations, the device 2200 includes additional memory that is external to the system-in-package or system-on-chip device 2222 and coupled to the system-in-package or system-on-chip device 2222 via an interface or controller.

The device 2200 may include a smart speaker (e.g., the processor 2206 may execute the instructions 2256 to run a voice-controlled digital assistant application), a speaker bar, a mobile communication device, a smart phone, a cellular phone, a laptop computer, a computer, a tablet, a personal digital assistant, a display device, a television, a gaming console, a music player, a radio, a digital video player, a DVD player, a tuner, a camera, a navigation device, a headset, an augmented realty headset, a mixed reality headset, a virtual reality headset, a vehicle, or any combination thereof.

In conjunction with the described implementations, an apparatus includes means for generating a first reconstructed data sample based on a first latent vector of a feedback recurrent autoencoder (FRAE). The first reconstructed data sample corresponds to a reconstructed version of a first data sample in a time series of data samples of a portion of a data stream. For example, the means for generating the first reconstructed data sample includes the decoder portion 115 of the FRAE 110, the decoder portion 117 of the reception device 104, the subsystem 410, the processor(s) 910, the processor 2206, the processor(s) 2210, the speech and music codec 2208, the vocoder decoder 2238, one or more other circuits or components configured to generate the first reconstructed data sample, or any combination thereof.

The apparatus also includes means for generating a second reconstructed data sample based on a second latent vector of the FRAE. The second reconstructed data sample corresponds to a reconstructed version of a second data sample in the time series of data samples. For example, the means for generating the second reconstructed data sample includes the decoder portion 115 of the FRAE 110, the decoder portion 117 of the reception device 104, the subsystem 410, the processor(s) 910, the processor 2206, the processor(s) 2210, the speech and music codec 2208, the vocoder decoder 2238, one or more other circuits or components configured to generate the second reconstructed data sample, or any combination thereof.

The apparatus further includes means for providing the first reconstructed data sample and the second reconstructed data sample as inputs to a neural network. The neural network is configured to use machine-learning predictive coding to generate a network-predicted data sample. The network-predicted data sample corresponds to a predicted version of a particular data sample in the time series of data samples, and the particular data sample is disposed in-between the first data sample and the second data sample. For example, the means for providing includes the FRAE 110, the decoder portion 117 of the reception device 104, the processor(s) 910, the processor 2206, the processor(s) 2210, the speech and music codec 2208, the vocoder decoder 2238, one or more other circuits or components configured to provide the reconstructed data samples as inputs to the neural network, or any combination thereof.

In some implementations, a non-transitory computer-readable medium includes instructions that, when executed by one or more processors of a device, cause the one or more processors to generate a first reconstructed data sample (e.g., the reconstructed data sample 126A) based on a first latent vector (e.g., the latent vector 124A) of a FRAE. The first reconstructed data sample corresponds to a reconstructed version of a first data sample (e.g., the data sample 120A) in a time series of data samples (e.g., the data samples 120) of a portion of a data stream (e.g., the data stream 404). Execution of the instructions also causes the one or more processors to generate a second reconstructed data sample (e.g., the reconstructed data sample 126C) based on a second latent vector (e.g., the latent vector 124C) of the FRAE. The second reconstructed data sample corresponds to a reconstructed version of a second data sample (e.g., the data sample 120C) in the time series of data samples. Execution of the instructions also causes the one or more processors to provide the first reconstructed data sample and the second reconstructed data sample as inputs to a neural network (e.g., the neural network 114). The neural network is configured to use machine-learning predictive coding to generate a network-predicted data sample (e.g., the network-predicted data sample 150). The network-predicted data sample corresponds to a predicted version of a particular data sample (e.g., the data sample 120B) in the time series of data samples, and the particular data sample is disposed in-between the first data sample and the second data sample.

Those of skill would further appreciate that the various illustrative logical blocks, configurations, modules, circuits, and algorithm steps described in connection with the implementations disclosed herein may be implemented as electronic hardware, computer software executed by a processor, or combinations of both. Various illustrative components, blocks, configurations, modules, circuits, and steps have been described above generally in terms of their functionality. Whether such functionality is implemented as hardware or processor executable instructions depends upon the particular application and design constraints imposed on the overall system. Skilled artisans may implement the described functionality in varying ways for each particular application, such implementation decisions are not to be interpreted as causing a departure from the scope of the present disclosure.

The steps of a method or algorithm described in connection with the implementations disclosed herein may be embodied directly in hardware, in a software module executed by a processor, or in a combination of the two. A software module may reside in random access memory (RAM), flash memory, read-only memory (ROM), programmable read-only memory (PROM), erasable programmable read-only memory (EPROM), electrically erasable programmable read-only memory (EEPROM), registers, hard disk, a removable disk, a compact disc read-only memory (CD-ROM), or any other form of non-transient storage medium known in the art. An exemplary storage medium is coupled to the processor such that the processor may read information from, and write information to, the storage medium. In the alternative, the storage medium may be integral to the processor. The processor and the storage medium may reside in an application-specific integrated circuit (ASIC). The ASIC may reside in a computing device or a user terminal. In the alternative, the processor and the storage medium may reside as discrete components in a computing device or user terminal.

The previous description of the disclosed implementations is provided to enable a person skilled in the art to make or use the disclosed implementations. Various modifications to these implementations will be readily apparent to those skilled in the art, and the principles defined herein may be applied to other implementations without departing from the scope of the disclosure. Thus, the present disclosure is not intended to be limited to the implementations shown herein and is to be accorded the widest scope possible consistent with the principles and novel features as defined by the following claims.

## Claims

1. A device (2002) comprising:
a memory (2020); and
one or more processors (2010) coupled to the memory and operably configured to:
generate a first reconstructed data sample corresponding to a reconstructed version of a first data sample in a time series of data samples of a portion of a data stream;
generate a second reconstructed data sample corresponding to a reconstructed version of a second data sample in the time series of data samples;
provide the first reconstructed data sample and the second reconstructed data sample as inputs to a neural network (214), the neural network configured to use machine-learning predictive coding to generate a network-predicted data sample, the network-predicted data sample corresponding to a predicted version of a particular data sample in the time series of data samples, and the particular data sample positioned between the first data sample and the second data sample;
determine a residual vector associated with the network-predicted data sample;
quantize the residual vector using a codebook (204) to generate a residual code; and
initiate transmission of the residual code to a receiving device via a communication network,
**characterized in that** the residual vector is determined and quantized in response to a determination that network traffic is above a particular threshold.

2. The device (2002) of claim 1, wherein the one or more processors (2010) are operably configured to:
provide the network-predicted data sample and the first reconstructed data sample as inputs to the neural network, the neural network configured to use the machine-learning predictive coding to generate another network-predicted data sample, the other network-predicted data sample corresponding to a predicted version of another particular data sample in the time series of data samples, and the other particular data sample positioned between the first data sample and the particular data sample.

3. The device (2002) of claim 2, wherein the one or more processors (2010) are operably configured to provide a temporal position input to the neural network, wherein the temporal position input indicates a temporal position of the other particular data sample relative to the first data sample and the particular data sample.

4. The device (2002) of claim 1, wherein the one or more processors (2010) are operably configured to:
generate a first packet based on the first reconstructed data sample; and
generate a second packet based on the second reconstructed data sample.

5. The device (2002) of claim 1, wherein the one or more processors (2010) are operably configured to:
initiate transmission of data representing the first data sample to a receiving device as part of a first packet, wherein zero bits of the first packet are dedicated to the particular data sample; and
initiate transmission of data representing the second data sample to the receiving device as part of a second packet.

6. The device (2002) of claim 1, wherein the residual vector is based on a comparison of the particular data sample and the network-predicted data sample.

7. The device (2002) of claim 1, wherein the one or more processors (2010) are operably configured to:
receive a first packet from a transmitting device, the first packet comprising data representing the first data sample; and
receive a second packet from the transmitting device, the second packet comprising data representing the second data sample.

8. The device (2002) of claim 7, wherein the one or more processors (2010) are operably configured to:
receive a residual code from the transmitting device; and
modify the network-predicted data sample based on the residual code.

9. The device (2002) of claim 1, wherein the first data sample is represented by first latent vector of a feedback recurrent autoencoder, FRAE, and wherein second data sample is represented by second latent vector of the FRAE.

10. A method (1900) comprising:
generating (1902) a first reconstructed data sample corresponding to a reconstructed version of a first data sample in a time series of data samples of a portion of a data stream;
generating (1904) a second reconstructed data sample corresponding to a reconstructed version of a second data sample in the time series of data samples;
providing (1906) the first reconstructed data sample and the second reconstructed data sample as inputs to a neural network, the neural network configured to use machine-learning predictive coding to generate a network-predicted data sample, the network-predicted data sample corresponding to a predicted version of a particular data sample in the time series of data samples, and the particular data sample positioned between the first data sample and the second data sample;
determining a residual vector associated with the network-predicted data sample;
quantizing the residual vector using a codebook (204) to generate a residual code; and
initiating transmission of the residual code to a receiving device via a communication network,
**characterized in that**
the residual vector is determined and quantized in response to a determination that network traffic is above a particular threshold.

11. The method (1900) of claim 10, further comprising:
providing the network-predicted data sample and the first reconstructed data sample as inputs to the neural network, the neural network configured to use the machine-learning predictive coding to generate another network-predicted data sample, the other network-predicted data sample corresponding to a predicted version of another particular data sample in the time series of data samples, and the other particular data sample positioned between the first data sample and the particular data sample.

12. The method (1900) of claim 11, further comprising providing a temporal position input to the neural network, wherein the temporal position input indicates temporal position of the other particular data sample relative to the first data sample and the particular data sample.

13. The method (1900) of claim 10, further comprising:
generating a first packet based on the first reconstructed data sample; and generating a second packet based on the second reconstructed data sample; or
transmitting data representing the first data sample to a receiving device as part of a first packet, wherein zero bits of the first packet are dedicated to the particular data sample; and transmitting data representing the second data sample to the receiving device as part of a second packet.

14. The method (1900) of claim 10, wherein:
the residual vector is based on a comparison of the particular data sample and the network-predicted data sample.

15. A non-transitory computer-readable medium (2020) comprising instructions (2022) that, when executed by one or more processors (2010), cause the one or more processors to:
generate (1902) a first reconstructed data sample corresponding to a reconstructed version of a first data sample in a time series of data samples of a portion of a data stream;
generate (1904) a second reconstructed data sample corresponding to a reconstructed version of a second data sample in the time series of data samples;
provide (1906) the first reconstructed data sample and the second reconstructed data sample as inputs to a neural network, the neural network configured to use machine-learning predictive coding to generate a network-predicted data sample, the network-predicted data sample corresponding to a predicted version of a particular data sample in the time series of data samples, and the particular data sample positioned between the first data sample and the second data sample;
determine a residual vector associated with the network-predicted data sample;
quantize the residual vector using a codebook to generate a residual code; and
initiate transmission of the residual code to a receiving device via a communication network,
**characterized in that**
the residual vector is determined and quantized in response to a determination that network traffic is above a particular threshold.

## Patentansprüche

1. Vorrichtung (2002), umfassend:
einen Speicher (2020); und
einen oder mehrere Prozessoren (2010), die mit dem Speicher gekoppelt und funktionsfähig zu Folgendem konfiguriert sind:
Erzeugen einer ersten rekonstruierten Datenprobe, die einer rekonstruierten Version einer ersten Datenprobe in einer Zeitreihe von Datenproben eines Abschnitts eines Datenstroms entspricht;
Erzeugen einer zweiten rekonstruierten Datenprobe, die einer rekonstruierten Version einer zweiten Datenprobe in der Zeitreihe von Datenproben entspricht;
Bereitstellen der ersten rekonstruierten Datenprobe und der zweiten rekonstruierten Datenprobe als Eingaben für ein neuronales Netzwerk (214), wobei das neuronale Netzwerk konfiguriert ist, um maschinelles Lernen mit prädiktiver Codierung zu verwenden, um eine vom Netzwerk vorhergesagte Datenprobe zu erzeugen, wobei die vom Netzwerk vorhergesagte Datenprobe einer vorhergesagten Version einer bestimmten Datenprobe in der Zeitreihe von Datenproben entspricht, und die bestimmte Datenprobe zwischen der ersten Datenprobe und der zweiten Datenprobe positioniert ist;
Bestimmen eines mit der vom Netzwerk vorhergesagten Datenprobe assoziierten Residualvektors;
Quantisieren des Residualvektors unter Verwendung eines Codebuchs (204), um einen Residualcode zu erzeugen; und
Initiieren einer Übertragung des Residualcodes an eine Empfangsvorrichtung über ein Kommunikationsnetzwerk,
**dadurch gekennzeichnet, dass**
der Residualvektor als Antwort auf eine Bestimmung, dass der Netzwerkverkehr über einem bestimmten Schwellenwert liegt, bestimmt und quantisiert wird.

2. Vorrichtung (2002) nach Anspruch 1, wobei der eine oder die mehreren Prozessoren (2010) funktionsfähig zu Folgendem konfiguriert sind:
Bereitstellen der vom Netzwerk vorhergesagten Datenprobe und der ersten rekonstruierten Datenprobe als Eingaben für das neuronale Netzwerk, wobei das neuronale Netzwerk konfiguriert ist, um das maschinelle Lernen mit prädiktiver Codierung zu verwenden, um eine weitere vom Netzwerk vorhergesagte Datenprobe zu erzeugen, wobei die andere vom Netzwerk vorhergesagte Datenprobe einer vorhergesagten Version einer weiteren bestimmten Datenprobe in der Zeitreihe von Datenproben entspricht, und die andere bestimmte Datenprobe zwischen der ersten Datenprobe und der bestimmten Datenprobe positioniert ist.

3. Vorrichtung (2002) nach Anspruch 2, wobei der eine oder die mehreren Prozessoren (2010) funktionsfähig konfiguriert sind, um dem neuronalen Netzwerk eine temporale Positionseingabe bereitzustellen, wobei die temporale Positionseingabe eine temporale Position der anderen bestimmten Datenprobe relativ zur ersten Datenprobe und zur bestimmten Datenprobe angibt.

4. Vorrichtung (2002) nach Anspruch 1, wobei der eine oder die mehreren Prozessoren (2010) funktionsfähig zu Folgendem konfiguriert sind:
Erzeugen eines ersten Pakets, basierend auf der ersten rekonstruierten Datenprobe; und
Erzeugen eines zweiten Pakets, basierend auf der zweiten rekonstruierten Datenprobe.

5. Vorrichtung (2002) nach Anspruch 1, wobei der eine oder die mehreren Prozessoren (2010) funktionsfähig zu Folgendem konfiguriert sind:
Initiieren der Übertragung von Daten, die die erste Datenprobe repräsentieren, an eine Empfangsvorrichtung als Teil eines ersten Pakets, wobei null Bits des ersten Pakets der bestimmten Datenprobe zugeordnet sind; und
Initiieren der Übertragung von Daten, die die zweite Datenprobe repräsentieren, an die Empfangsvorrichtung als Teil eines zweiten Pakets.

6. Vorrichtung (2002) nach Anspruch 1, wobei der Residualvektor auf einem Vergleich der bestimmten Datenprobe mit der vom Netzwerk vorhergesagten Datenprobe basiert.

7. Vorrichtung (2002) nach Anspruch 1, wobei der eine oder die mehreren Prozessoren (2010) funktionsfähig zu Folgendem konfiguriert sind:
Empfangen eines ersten Pakets von einer Übertragungsvorrichtung, wobei das erste Paket Daten umfasst, die die erste Datenprobe repräsentieren; und
Empfangen eines zweiten Pakets von der Übertragungsvorrichtung, wobei das zweite Paket Daten umfasst, die die zweite Datenprobe repräsentieren.

8. Vorrichtung (2002) nach Anspruch 7, wobei der eine oder die mehreren Prozessoren (2010) funktionsfähig zu Folgendem konfiguriert sind:
Empfangen eines Residualcodes von der Übertragungsvorrichtung; und
Modifizieren der vom Netzwerk vorhergesagten Datenprobe basierend auf dem Residualcode.

9. Vorrichtung (2002) nach Anspruch 1, wobei die erste Datenprobe durch einen ersten latenten Vektor eines rückkopplenden rekurrenten Autoencoders, FRAE, repräsentiert wird, und wobei die zweite Datenprobe durch einen zweiten latenten Vektor des FRAE repräsentiert wird.

10. Verfahren (1900), umfassend:
Erzeugen (1902) einer ersten rekonstruierten Datenprobe, die einer rekonstruierten Version einer ersten Datenprobe in einer Zeitreihe von Datenproben eines Abschnitts eines Datenstroms entspricht;
Erzeugen (1904) einer zweiten rekonstruierten Datenprobe, die einer rekonstruierten Version einer zweiten Datenprobe in der Zeitreihe von Datenproben entspricht;
Bereitstellen (1906) der ersten rekonstruierten Datenprobe und der zweiten rekonstruierten Datenprobe als Eingaben für ein neuronales Netzwerk, wobei das neuronale Netzwerk konfiguriert ist, um maschinelles Lernen mit prädiktiver Codierung zu verwenden, um eine vom Netzwerk vorhergesagte Datenprobe zu erzeugen, wobei die vom Netzwerk vorhergesagte Datenprobe einer vorhergesagten Version einer bestimmten Datenprobe in der Zeitreihe von Datenproben entspricht, und die bestimmte Datenprobe zwischen der ersten Datenprobe und der zweiten Datenprobe positioniert ist;
Bestimmen eines mit der vom Netzwerk vorhergesagten Datenprobe assoziierten Residualvektors;
Quantisieren des Residualvektors unter Verwendung eines Codebuchs (204), um einen Residualcode zu erzeugen; und
Initiieren einer Übertragung des Residualcodes an eine Empfangsvorrichtung über ein Kommunikationsnetzwerk,
**dadurch gekennzeichnet, dass**
der Residualvektor als Antwort auf eine Bestimmung, dass der Netzwerkverkehr über einem bestimmten Schwellenwert liegt, bestimmt und quantisiert wird.

11. Verfahren (1900) nach Anspruch 10, ferner umfassend:
Bereitstellen der vom Netzwerk vorhergesagten Datenprobe und der ersten rekonstruierten Datenprobe als Eingaben für das neuronale Netzwerk, wobei das neuronale Netzwerk konfiguriert ist, um das maschinelle Lernen mit prädiktiver Codierung zu verwenden, um eine weitere vom Netzwerk vorhergesagte Datenprobe zu erzeugen, wobei die andere vom Netzwerk vorhergesagte Datenprobe einer vorhergesagten Version einer weiteren bestimmten Datenprobe in der Zeitreihe von Datenproben entspricht, und die andere bestimmte Datenprobe zwischen der ersten Datenprobe und der bestimmten Datenprobe positioniert ist.

12. Verfahren (1900) nach Anspruch 11, ferner umfassend das Bereitstellen einer temporalen Positionseingabe an das neuronale Netzwerk, wobei die temporale Positionseingabe die temporale Position der anderen bestimmten Datenprobe relativ zur ersten Datenprobe und zur bestimmten Datenprobe angibt.

13. Verfahren (1900) nach Anspruch 10, ferner umfassend:
Erzeugen eines ersten Pakets, basierend auf der ersten rekonstruierten Datenprobe; und Erzeugen eines zweiten Pakets, basierend auf der zweiten rekonstruierten Datenprobe; oder
Übertragen von Daten, die die erste Datenprobe repräsentieren, an eine Empfangsvorrichtung als Teil eines ersten Pakets, wobei null Bits des ersten Pakets der bestimmten Datenprobe zugeordnet sind; und Übertragen von Daten, die die zweite Datenprobe repräsentieren, an die Empfangsvorrichtung als Teil eines zweiten Pakets.

14. Verfahren (1900) nach Anspruch 10, wobei:
der Residualvektor auf einem Vergleich der bestimmten Datenprobe mit der vom Netzwerk vorhergesagten Datenprobe basiert.

15. Nichtflüchtiges, computerlesbares Medium (2020), umfassend Anweisungen (2022), die, wenn sie von einem oder mehreren Prozessoren (2010) ausgeführt werden, den einen oder die mehreren Prozessoren zu Folgendem veranlassen:
Erzeugen (1902) einer ersten rekonstruierten Datenprobe, die einer rekonstruierten Version einer ersten Datenprobe in einer Zeitreihe von Datenproben eines Abschnitts eines Datenstroms entspricht;
Erzeugen (1904) einer zweiten rekonstruierten Datenprobe, die einer rekonstruierten Version einer zweiten Datenprobe in der Zeitreihe von Datenproben entspricht;
Bereitstellen (1906) der ersten rekonstruierten Datenprobe und der zweiten rekonstruierten Datenprobe als Eingaben für ein neuronales Netzwerk, wobei das neuronale Netzwerk konfiguriert ist, um maschinelles Lernen mit prädiktiver Codierung zu verwenden, um eine vom Netzwerk vorhergesagte Datenprobe zu erzeugen, wobei die vom Netzwerk vorhergesagte Datenprobe einer vorhergesagten Version einer bestimmten Datenprobe in der Zeitreihe von Datenproben entspricht, und die bestimmte Datenprobe zwischen der ersten Datenprobe und der zweiten Datenprobe positioniert ist;
Bestimmen eines mit der vom Netzwerk vorhergesagten Datenprobe assoziierten Residualvektors;
Quantisieren des Residualvektors unter Verwendung eines Codebuchs, um einen Residualcode zu erzeugen; und
Initiieren einer Übertragung des Residualcodes an eine Empfangsvorrichtung über ein Kommunikationsnetzwerk,
**dadurch gekennzeichnet, dass**
der Residualvektor als Antwort auf eine Bestimmung, dass der Netzwerkverkehr über einem bestimmten Schwellenwert liegt, bestimmt und quantisiert wird.

## Revendications

1. Dispositif (2002) comprenant :
une mémoire (2020) ; et
un ou plusieurs processeurs (2010) couplés à la mémoire et configurés fonctionnellement pour :
générer un premier échantillon de données reconstruit correspondant à une version reconstruite d'un premier échantillon de données dans une série chronologique d'échantillons de données d'une portion d'un flux de données ;
générer un deuxième échantillon de données reconstruit correspondant à une version reconstruite d'un deuxième échantillon de données dans la série chronologique d'échantillons de données ;
fournir le premier échantillon de données reconstruit et le deuxième échantillon de données reconstruit en tant qu'entrées à un réseau de neurones (214), le réseau de neurones étant configuré pour utiliser un codage prédictif d'apprentissage automatique pour générer un échantillon de données prédit par réseau,
l'échantillon de données prédit par réseau correspondant à une version prédite d'un échantillon de données particulier dans la série chronologique d'échantillons de données, et l'échantillon de données particulier étant positionné entre le premier échantillon de données et le deuxième échantillon de données ;
déterminer un vecteur résiduel associé à l'échantillon de données prédit par réseau ;
quantifier le vecteur résiduel en utilisant un livre de codes (204) pour générer un code résiduel ; et
initier la transmission du code résiduel à un dispositif de réception via un réseau de communication,
**caractérisé en ce que**
le vecteur résiduel est déterminé et quantifié en réponse à une détermination selon laquelle le trafic réseau est supérieur à un seuil particulier.

2. Dispositif (2002) selon la revendication 1, dans lequel les un ou plusieurs processeurs (2010) sont en outre configurés fonctionnellement pour :
fournir l'échantillon de données prédit par réseau et le premier échantillon de données reconstruit en tant qu'entrées au réseau de neurones , le réseau de neurones étant configuré pour utiliser le codage prédictif d'apprentissage automatique pour générer un autre échantillon de données prédit par réseau, l'autre échantillon de données prédit par réseau correspondant à une version prédite d'un autre échantillon de données particulier dans la série chronologique d'échantillons de données, et l'autre échantillon de données particulier étant positionné entre le premier échantillon de données et l'échantillon de données particulier.

3. Dispositif (2002) selon la revendication 2, dans lequel les un ou plusieurs processeurs (2010) sont configurés fonctionnellement pour fournir une entrée de position temporelle au réseau de neurones, dans lequel l'entrée de position temporelle indique une position temporelle de l'autre échantillon de données particulier par rapport au premier échantillon de données et à l'échantillon de données particulier.

4. Dispositif (2002) selon la revendication 1, dans lequel les un ou plusieurs processeurs (2010) sont en outre configurés fonctionnellement pour :
générer un premier paquet sur la base du premier échantillon de données reconstruit ; et
générer un deuxième paquet sur la base du deuxième échantillon de données reconstruit.

5. Dispositif (2002) selon la revendication 1, dans lequel les un ou plusieurs processeurs (2010) sont en outre configurés fonctionnellement pour :
initier la transmission de données représentant le premier échantillon de données à un dispositif de réception dans le cadre d'un premier paquet, dans lequel aucun bit du premier paquet n'est dédié à l'échantillon de données particulier ; et
initier la transmission de données représentant le deuxième échantillon de données au dispositif de réception dans le cadre d'un deuxième paquet.

6. Dispositif (2002) selon la revendication 1, dans lequel le vecteur résiduel est basé sur une comparaison de l'échantillon de données particulier et de l'échantillon de données prédit par réseau.

7. Dispositif (2002) selon la revendication 1, dans lequel les un ou plusieurs processeurs (2010) sont en outre configurés fonctionnellement pour :
recevoir un premier paquet d'un dispositif de transmission, le premier paquet comprenant des données représentant le premier échantillon de données ; et
recevoir un deuxième paquet du dispositif de transmission, le deuxième paquet comprenant des données représentant le deuxième échantillon de données.

8. Dispositif (2002) selon la revendication 7, dans lequel les un ou plusieurs processeurs (2010) sont en outre configurés fonctionnellement pour :
recevoir un code résiduel du dispositif de transmission ; et
modifier l'échantillon de données prédit par réseau en fonction du code résiduel.

9. Dispositif (2002) selon la revendication 1, dans lequel le premier échantillon de données est représenté par un premier vecteur latent d'un autocodeur récurrent de rétroaction, FRAE, et dans lequel le deuxième échantillon de données est représenté par un deuxième vecteur latent du FRAE.

10. Procédé (1900) comprenant :
la génération (1902) d'un premier échantillon de données reconstruit correspondant à une version reconstruite d'un premier échantillon de données dans une série chronologique d'échantillons de données d'une portion d'un flux de données ;
la génération (1904) d'un deuxième échantillon de données reconstruit correspondant à une version reconstruite d'un deuxième échantillon de données dans la série chronologique d'échantillons de données ;
la fourniture (1906) du premier échantillon de données reconstruit et du deuxième échantillon de données reconstruit en tant qu'entrées à un réseau de neurones, le réseau de neurones étant configuré pour utiliser un codage prédictif d'apprentissage automatique pour générer un échantillon de données prédit par réseau,
l'échantillon de données prédit par réseau correspondant à une version prédite d'un échantillon de données particulier dans la série chronologique d'échantillons de données, et l'échantillon de données particulier étant positionné entre le premier échantillon de données et le deuxième échantillon de données ;
la détermination d'un vecteur résiduel associé à l'échantillon de données prédit par réseau ; la quantification du vecteur résiduel en utilisant un livre de codes (204) pour générer un code résiduel ; et
l'initiation de la transmission du code résiduel à un dispositif de réception via un réseau de communication,
**caractérisé en ce que**
le vecteur résiduel est déterminé et quantifié en réponse à une détermination selon laquelle le trafic réseau est supérieur à un seuil particulier.

11. Procédé (1900) selon la revendication 10, comprenant en outre :
la fourniture de l'échantillon de données prédit par réseau et du premier échantillon de données reconstruit en tant qu'entrées au réseau de neurones, le réseau de neurones étant configuré pour utiliser le codage prédictif d'apprentissage automatique pour générer un autre échantillon de données prédit par réseau, l'autre échantillon de données prédit par réseau correspondant à une version prédite d'un autre échantillon de données particulier dans la série chronologique d'échantillons de données, et l'autre échantillon de données particulier étant positionné entre le premier échantillon de données et l'échantillon de données particulier.

12. Procédé (1900) selon la revendication 11, comprenant en outre la fourniture d'une entrée de position temporelle au réseau de neurones, dans lequel l'entrée de position temporelle indique une position temporelle de l'autre échantillon de données particulier par rapport au premier échantillon de données et à l'échantillon de données particulier.

13. Procédé (1900) selon la revendication 10, comprenant en outre :
la génération d'un premier paquet sur la base du premier échantillon de données reconstruit ; et la génération d'un deuxième paquet sur la base du deuxième échantillon de données reconstruit ; ou
la transmission de données représentant le premier échantillon de données à un dispositif de réception dans le cadre d'un premier paquet, dans lequel aucun bit du premier paquet n'est dédié à l'échantillon de données particulier ; et la transmission de données représentant le deuxième échantillon de données au dispositif de réception dans le cadre d'un deuxième paquet.

14. Procédé (1900) selon la revendication 10, dans lequel :
le vecteur résiduel est basé sur une comparaison de l'échantillon de données particulier et de l'échantillon de données prédit par réseau.

15. Support non transitoire (2020) lisible par ordinateur comprenant des instructions (2022) qui, lorsqu'elles sont exécutées par un ou plusieurs processeurs (2010), amènent les un ou plusieurs processeurs à :
générer (1902) un premier échantillon de données reconstruit correspondant à une version reconstruite d'un premier échantillon de données dans une série chronologique d'échantillons de données d'une portion d'un flux de données ;
générer (1904) un deuxième échantillon de données reconstruit correspondant à une version reconstruite d'un deuxième échantillon de données dans la série chronologique d'échantillons de données ;
fournir (1906) le premier échantillon de données reconstruit et le deuxième échantillon de données reconstruit en tant qu'entrées à un réseau de neurones, le réseau de neurones étant configuré pour utiliser un codage prédictif d'apprentissage automatique pour générer un échantillon de données prédit par réseau, l'échantillon de données prédit par réseau correspondant à une version prédite d'un échantillon de données particulier dans la série chronologique d'échantillons de données, et l'échantillon de données particulier étant positionné entre le premier échantillon de données et le deuxième échantillon de données ;
déterminer un vecteur résiduel associé à l'échantillon de données prédit par réseau ; quantifier le vecteur résiduel en utilisant un livre de codes pour générer un code résiduel ; et initier la transmission du code résiduel à un dispositif de réception via un réseau de communication,
**caractérisé en ce que**
le vecteur résiduel est déterminé et quantifié en réponse à une détermination selon laquelle le trafic réseau est supérieur à un seuil particulier.
